# EUROPÄISCHE PATENTANMELDUNG

(11) **EP 2 110 395 A1**
(43) Veröffentlichungstag der Anmeldung: **21.10.2009**
(21) Anmeldenummer: 08007568.2
(22) Anmeldetag: 18.04.2008
(51) Int. Cl.: C08G 18/10, C08G 18/12, C08G 18/08, C09D 175/04

(54) **Wässrige Polyurethanlösungen für Polyurethan-Systeme**

(71) Anmelder: Bayer MaterialScience AG, 51368 Leverkusen (DE)
(72) Erfinder: Blum, Harald Dr., 51375 Leverkusen (DE); Melchiors, Martin Dr., 42799 Leichlingen (DE)

(57) **Zusammenfassung**

Die vorliegende Erfindung betrifft neuartige wässrige Polyurethanlösungen, die darin enthaltenen löslichen Polyurethane, ein Verfahren zur deren Herstellung sowie die Verwendung in Polyurethan-Systemen.

## Beschreibung

Die vorliegende Erfindung betrifft neuartige wässrige Polyurethanlösungen, die darin enthaltenen löslichen Polyurethane, ein Verfahren zur deren Herstellung sowie die Verwendung in Polyurethan-Systemen.

Wässrige Bindemittel auf Basis von Polyurethan-Dispersionen sind seit langem bekannter Stand der Technik und beispielsweise beschrieben in Houben-Weyl, Methoden der organischen Chemie, u. Aufl. Band E 20, S. 1659 (1987), J. W. Rosthauser, K. Nachtkamp in "Advances in Urethane Science and Technology", K. C. Frisch und D. Klempner, Editiors, Vol. 10, S. 121-162 (1987) oder D.Dietrich, K. Uhlig in Ullmann's Encyclopedia of Industrial Chemistry, Vol. A 21, S. 677 (1992).

Aminoalkohole sind hierbei oftmals beschriebene Aufbaukomponenten. So beschreibt DE-A 4237965 wässrige Polyurethan-Dispersionen, die erhalten werden durch Umsetzung von Di-oder Polyisocyanaten, Dimerdiol enthaltenden hydrophoben Polyolen und hydrophilierenden Verbindungen. In den Beispielen werden Dispersionen mit eher niedrigen Feststoffgehalten von 25 bis 40 Gew.-% beschrieben, der erfindungswesentliche Einsatz von Dimerdiolen enthaltenden hydrophoben Diolen schränkt die Variabilität solcher Produkte jedoch stark ein. Eine ggf. mögliche und beschriebene Umsetzung der isocyanatfunktionellen Zwischenstufe vor dem Dispergieren mit Aminoalkoholen, ist nicht erfindungswesentlich, da auch Triole eingesetzt werden können bzw. auch eine direkte Dispergierung und Reaktion mit Wasser möglich ist.

DE-A 4337961 beschreibt wässrige Lacke, enthaltend wasserverdünnbares Polyurethanharz, herstellbar durch Umsetzung von Polyisocyanat, hydrophilierenden Komponenten, ggf. Polyester- bzw. Polyetherpolyolen und ggf. niedermolekularen Polyolen zu einem isocyanatfunktionellen Prepolymer mit einer Säurezahl von 18 bis 70 mg KOH/g, wobei in einem weiteren Schritt ein Teil der Isocyanatgruppen mit Blockierungsmittel umgesetzt, ggf. weiteres Polyisocyanat zugegeben und anschließend mit Verbindungen mit mindestens einer primären oder sekundären Aminogruppe und mindestens einer Hydroxylgruppe umgesetzt wird. Dadurch werden unter Einbrennbedingungen (in den Beispielen bei 160°C) selbstvernetzende Polyurethan-Dispersionen, d.h. Dispersionen, bei denen in einem Molekül sowohl Hydroxylgruppen als auch blockierte Isocyanatgruppen enthalten sind, mit relativ niedrigen Feststoffgehalten (37 bis 42 Gew. -% in den Beispielen) für Einbrennlacke, insbesondere für Einbrennfüller in der Automobillackierung erhalten. Aufgrund der niedrigen Mengen der eingebauten Aminoalkohole sind die Harnstoffgruppengehalte, die Funktionalitäten bezogen auf Hydroxylgruppen und die Hydroxylgruppengehalte nur gering.

DE-A 10214028 beschreibt Polyurethane für wasserverdünnbare Füllerzusammensetzungen in der Automobillackierung mit einem Festkörpergehalt von größer als 50 Gew.-%, die bei Einbrennbedingungen ab 140°C die Anforderungen bezüglich Steinschlagbeständigkeit erfüllen und Überbrennstabilität aufweisen. Es wird beschrieben, dass solch hohe Feststoffgehalte mit wasserdispergierbaren Polyurethanen, die als Hydrophilierungsmittel neutralisierte Dimethylolpropionsäure enthalten, nicht erreichbar seien. Die erfindungsgemäßen wasserverdünnbaren Polyurethane mit mindestens zwei freien Hydroxylgruppen werden erhalten durch Umsetzung von Alkanolaminen mit einer NCO-Verbindung zu einem hydroxyfunktionellen Zwischenprodukt, gefolgt von der Addition eines cyclischen Carbonsäureanhydrids an die Hydroxylgruppen unter Ausbildung von Esterverknüpfungen. Die für die Dispergierung des Polyurethans erforderlichen Carboxyl- bzw Carboxylatgruppen werden somit über ein Säureanhydrid in das Polymer eingebaut. Diese Art der Aufsäuerung über Anhydride führt zum Einbau der hydrophilierenden Verbindung über Halbesterbindungen. Es ist bekannt, dass solche Strukturen hydrolyseempfindlich sind, deshalb haben solche Dispersionen nur eine sehr beschränkte Haltbarkeit. In den Beispielen werden Polyurethan-Dispersionen mit Feststoffgehalten von 43 bis 45 Gew. -% erhalten. Hohe Funktionalitäten, bzw. hohe Hydroxylgruppengehalte sind auf diesem Weg nicht erzielbar, da ein Teil der Hydroxylgruppen durch die Umsetzung mit dem Säureanhydrid verbraucht wird.

DE-A 10147546 beschreibt organisch gelöste selbstvernetzende Polyurethane erhalten durch Umsetzung von speziellen aliphatisch-aromatischem Polyester, partiell blockiertem Polyisocyanat und einer Verbindungen mit mindestens 2 isocyanatreaktiven Gruppen, wie z.B. einen Aminoalkohol, die bei Verwendung als Basislack vorteilhafte Eigenschaften aufweisen sollen und gute CAB Verträglichkeit besitzen. Die Polyurethane sind in relativ großen Mengen organischen Lösemitteln gelöst und entsprechen damit nicht mehr den heutigen Anforderungen in Bezug auf Reduzierung der Emissionen.

DE-A 19849207 beschreibt wasserverdünnbare Bindemittelzusammensetzungen enthaltend wasserverdünnbare Polyurethanharnstoff-Pastenharze und Polyetherpolyole für die Formulierung von Pigmentpasten zur Einarbeitung in wässrige Beschichtungsmittel. Die beschriebenen wasserverdünnbaren Polyurethanharnstoff-Pastenharze sind Umsetzungsprodukte von Polyol, Hydrophilierungskomponente, Polyisocyanat und Hydroxyamin und enthalten darüber hinaus eine zusätzliche Polyetherpolyolkomponente. Geeignete hydroxyfunktionelle Monoamine sind sowohl Amine mit primären, als auch mit sekundären Aminogruppen. Daraus werden gemäß Offenlegung vorzugsweise organische Lösemittel enthaltende Polyurethan-Dispersionen mit Feststoffgehalten bis 50, vorzugsweise bis 42 Gew. -% erhalten. Die in den Beispielen hergestellten Polyurethan-Dispersionen weisen Feststoffgehalte von 30 bis 35 Gew.- % sowie NMP Gehalte von ca. 6 Gew.-% auf. Damit genügen diese Produkte modernen Anforderung bezüglich Lösemittelgehalt und hohem Feststoffgehalt nicht mehr, außerdem schränkt der zwingende Einsatz von Polyetherpolyolen die Verwendungsmöglichkeiten auf Anwendungen ein, in denen Lichtechtheit und Bewitterungsstabilität von untergeordneter Bedeutung sind.

Obwohl der Stand der Technik bei wässrigen Polyurethan-Dispersionen sehr umfangreich ist, besteht nach wie vor großer Bedarf an verbesserten wässrigen Produkten. Insbesondere gefordert sind niedrige bis keine Emissionen, hohe Feststoffgehalte, hohe Verarbeitungssicherheit und Robustheit gegenüber äußeren Einflüssen, z.B. bezüglich schwankenden Werten der Luftfeuchte oder tiefen Lagertemperaturen, hohe störungsfrei erzielbare Schichtstärken, Hydrolysestabilität, exzellente filmmechanische Eigenschaften und darüber hinaus häufig auch hohe Vernetzungsdichten bzw. hohe Funktionalitäten.

Grundsätzlich problematisch bei dispersen Systemen wie denen der vorstehend genannten Art ist, dass zur eigentlichen Filmbildung beim Beschichtungsprozess die Koaleszenz und Verfilmung der dispersen Polymerpartikel so stattfinden muss, dass ein homogener optisch einwandfreier Film erhalten wird. Aufgrund der Komplexizität des Vorganges ist dies deutlich schwieriger und fehlerbehafteter als bei Systemen, in denen das filmbildende Polymer in gelöstem Zustand vorliegt.

Im Gegensatz zu Lösungen von Polyurethanen in organischen Lösemitteln sind qualitativ hochwertige Lösungen von Polyurethanen in Wasser bis heute nicht bekannt.

Aufgabe der vorliegenden Erfindung war es daher wässrige Lösungen von Polyurethanen bzw. Polyurethan-Polyharnstoffen bereitzustellen, welche Festkörpergehalte von über 50 Gew.-% aufweisen können, die oben genannten Anforderungen erfüllen und sich für optisch einwandfreie Beschichtungen mit vorteilhaftem Eigenschaftsprofil eignen.

Es wurde nun gefunden, dass wässrige Polyurethanlösungen bzw. Polyurethan-Polyharnstofflösungen mit den geforderten Eigenschaften gerade dann erhalten werden, wenn zum Aufbau der Polyurethane bzw. Polyurethan-Polyharnstoffe höherfunktionelle Polyisocyanate, sowie Aminoalkohole mit primärer und/oder sekundärer Aminogruppe und mindestens einer Hydroxylgruppe eingesetzt werden, wobei der Anteil an Aminoalkoholen daran, die eine sekundäre Aminogruppe aufweisen, mindestens 60 Gew.-% beträgt.

Gegenstand der Erfindung ist daher ein Verfahren zur Herstellung von wässrigen Lösungen von harnstoffguppenhaltigen, hydroxyfunktionellen Polyurethanen mit Hydroxylgruppengehalten von 2 bis 10 Gew. -% und Gehalten an Harnstoffgruppen (berechnet als NH-CO-NH-), die von Aminoalkoholen mit einer primären oder sekundären Aminogruppe und mindestens einer Hydroxylgruppe abgeleitet sind, von 3 bis 20 Gew. -%, jeweils bezogen auf das harnstoffguppenhaltige, hydroxyfunktionelle Polyurethan, bei dem zunächst NCO-funktionelle Prepolymere durch ein- oder mehrstufige Umsetzung von
a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,
b) mindestens einem Polyol
c) mindestens einem Polyisocyanat
d) ggf. sonstigen von den Verbindungen der Komponenten a), b) und e) verschiedenen hydroxy- und/oder aminofunktionellen Verbindungen hergestellt werden und diese dann
e) mit einer Aminoalkohol-Komponente, aus Aminoalkoholen mit einer primären oder sekundären Aminogruppe und mindestens einer Hydroxylgruppe umgesetzt werden, wobei der Anteil an Aminoalkoholen mit einer sekundären Aminogruppe bezogen auf die Gesamtmenge der Komponente e) mindestens 60 Gew.-% beträgt und die so erhaltenen harnstoffguppenhaltigen, hydroxyfunktionellen Polyurethane
f) in Wasser gelöst werden, wobei vor oder während des Lösungsvorgangs in Wasser die Säure- oder tertiären Aminogruppen der Hydrophilierungsmittel a) mit einem Neutralisationsmittel umgesetzt werden.

Ein weiterer Gegenstand der Erfindung sind die so erhältlichen wässrigen Lösungen hamstoffguppenhaltiger, hydroxyfunktioneller Polyurethane.

Ferner sind ein Gegenstand der Erfindung wasserlösliche harnstoffguppenhaltige, hydroxyfunktionelle Polyurethane mit Hydroxylgruppengehalten von 2 bis 10 Gew. -% und Gehalten an Harnstoffgruppen (berechnet als -NH-CO-NH-), die von Aminoalkoholen mit einer primären oder sekundären Aminogruppe und mindestens einer Hydroxylgruppe abgeleitet sind, von 3 bis 20 Gew. - %, jeweils bezogen auf das harnstoffguppenhaltige, hydroxyfunktionelle Polyurethan erhältlich durch Herstellung NCO-funktioneller Prepolymere durch Umsetzung von
a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,
b) mindestens einem Polyol
c) mindestens einem Polyisocyanat
d) ggf. sonstigen von den Verbindungen der Komponenten a), b) und e) verschiedenen hydroxy- und/oder aminofunktionellen Verbindungen und Umsetzung dieser
e) mit einer Aminoalkohol-Komponente, aus Aminoalkoholen mit einer primären oder sekundären Aminogruppe und mindestens einer Hydroxylgruppe umgesetzt werden, wobei der Anteil an Aminoalkoholen mit einer sekundären Aminogruppe bezogen auf die Gesamtmenge der Komponente e) mindestens 60 Gew.-% beträgt,
wobei die aus den Verbindungen der Komponente a) herrührenden Säuregruppen oder tertiäre Aminogruppen im harnstoffguppenhaltigen, hydroxyfunktionellen Polyurethan durch ganz oder teilweise Neutralisation in ihrer Salzform vorliegen können.

Ferner sind Polyurethansysteme ein Gegenstand der Erfindung sowie deren Verwendung als Beschichtungsmittel, Schlichten, Tinten, Druckfarben sowie Dichtstoffe.

Die in a) eingesetzten Hydrophilierungsmittel können als Säuregruppe zur anionischen Hydrophilierung Carbonsäure- oder Sulfonsäuregruppen und/oder deren korrespondierende Säureanionen enthalten. Zur kationischen Hydrophilierung können die Verbindungen der Komponente a) tertiäre Aminogruppen oder die entsprechend protonierten quartären Ammoniumgruppen enthalten.

Die Verbindungen der Komponente a) werden im erfindungsgemäßen Verfahren typischerweise in Mengen von 0,5 bis 10 Gew. -%, bevorzugt 1 bis 8 Gew. -% und besonders bevorzugt 2 bis 7 Gew.- % bezogen auf die harnstoffguppenhaltigen, hydroxyfunktionellen Polyurethane eingesetzt.

Geeignete Hydrophilierungsmittel a) sind Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Dimethylolessigsäure, 2,2-Dimethylolpentansäure, Dihydroxybernsteinsäure Hydroxypivalinsäure, N-(2-Aminoethyl)alanin, 2-(2-Amino-ethylamino)-ethansulfonsäure, Ethylendiaminpropyl- oder -butylsulfonsäure, 1,2- oder 1,3-Propylendiaminethylsulfonsäure, Äpfelsäure, Zitronensäure, Glykolsäure, Milchsäure, Glycin, Alanin, Taurin, Lysin, 3,5-Diaminobenzoesäure, 6-Aminohexansäure, 11- Aminoundecansäure, Aminoessigsäure ein Additionsprodukt von IPDA, Hexmethylendiamin oder anderer Diamine und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) bzw. die Salze der beschriebenen Hydrophilierungsmittel, sowie Mischungen der genannten und ggf. auch anderer Hydrophilierungsmittel.

Geeignete Hydrophilierungsmittel a) sind ebenfalls kationische Hydrophilierungsmittel wie mono-, di- oder trihydroxyfunktionelle tertiäre Amine bzw. mono-, di- oder triaminofunktionelle tertiäre Amine und deren Salze wie N-Methyldiethanolamin, N-Ethyldiethanolamin, N-Methyldiisopropanolamin, Trisopropanolamin, Triethanolamin, Dimethylethanolamin, Dimethylisopropanolamin bzw. die Salze der beschriebenen kationischen Hydrophilierungsmittel.

Bevorzugt werden in a) Hydrophilierungsmittel der vorstehend genannten Art mit Carbonsäure- oder Sulfonsäuregruppen bzw. den entsprechenden Säureanionen eingesetzt.

Besonders bevorzugte Hydrophilierungsmittel sind 2-(2-Amino-ethylamino-)ethansulfonsäure, das Additionsproduktes von IPDA und Acrylsäure (EP-A 0 916 647, Beispiel 1), Dimethylolpropionsäure und Hydroxypivalinsäure.

Geeignete Polyole b) sind die in der Polyurethanchemie an sich bekannten hydroxyfunktionellen Verbindungen wie
b1) Polyester,
b2) niedermolekulare Verbindungen mit Molekulargewichten von 62 bis 500 g/mol,
b3) Polycarbonate
b4) C2-Polyether und/oder C3-Polyether,
b5) C4-Polyether
wie auch hydroxyfunktionelle Epoxide, Polyolefine, Polymerisate, Rizinusöl, in Bezug auf Funktionalität und/oder Anzahl der Doppelbindungen modifizierte Rizinusöle, Kohlenwasserstoffharze, Formaldehyd-Kondensationsprodukte und Mischungen der vorstehend genannten Verbindungen.

Bezüglich der Molekulargewichte von b1), b3), b4) und b5) gibt es keine Einschränkungen, üblicherweise betragen die Molekulargewichte 500 bis 20000 g/mol, bevorzugt 500 bis 12000 g/mol.

Die Polyole b1) bis b5) können einzeln oder in beliebigen Mischungen untereinander aber auch gegebenenfalls in Mischungen mit weiteren Polyolen als Teil von b) eingesetzt werden.

Polyester b1) weisen typischerweise eine durchschnittliche Funktionalität von 1 bis 4, bevorzugt von 1,8 bis 3 und besonders bevorzugt von 2 auf. Es können dabei auch Mischungen verschiedener Polyester und auch Mischungen von Polyestern mit unterschiedlichen Funktionalitäten eingesetzt werden. Die Molekulargewichte von Polyestern b1) liegen besonders bevorzugt im Bereich von 700 bis 5000 g/mol.

Geeignete Polyester b1) können nach an sich bekannten Verfahren unter Abspaltung von Wasser bei Temperaturen von 100 bis 260°C, ggf. unter Mitverwendung üblicher Veresterungskatalysatoren wie para-Toluolsulfonsäure, Dibutylzinndilaurat, HCl, Zinn-II-chlorid, usw., vorzugsweise nach dem Prinzip einer Schmelz- oder Azeotropkondensation, ggf. unter Anlegen eines Vakuums bzw. dem Einsatz eines Schleppgases aus Mono-, Di-, Tri- und/oder Tetracarbonsäuren bzw. deren Anhydriden, mono-, di-, tri- und/oder tetrafunktionellen Alkoholen und ggf. Lactonen hergestellt werden. Im Falle einer azeotropen Veresterung wird das Schleppmittel, üblicherweise Isooctan, Xylol, Toluol oder Cyclohexan nach beendeter Reaktion im Vakuum abdestilliert. Bevorzugtes Herstellverfahren für die Polyester b1) ist eine Schmelzkondensation im Vakuum.

Geeignete Säuren als Polyesterbaustein können sein Phthalsäureanhydrid, Isophthalsäure, Terephthalsäure, Adipinsäure, Sebacinsäure, Korksäure, Bernsteinsäure, Maleinsäureanhydrid, Fumarsäure, Dimerfettsäuren, Tetrahydrophthalsäureanhydrid, Hexahydrophthalsäureanhydrid, Cyclohexandicarbonsäure, Trimellithsäureanhydrid, C8-C22-Fettsäuren wie 2-Ethylhexansäure, Stearinsäure, Ölsäure, Sojaölfettsäure, Erdnussölfettsäure, andere ungesättigte Fettsäuren, hydrierte Fettsäuren, Benzoesäure, Cyclohexancarbonsäure und Mischungen der genannten und ggf. auch anderer Säuren.

Geeignete Alkohole als Polyesterbaustein sind z.B. 1,2-Ethylengykol, Diethylenglykol, Triethylenglykol, Tetraethylenglykol, 1,2-Propylenglykol, Dipropylenglykol, Tripropylenglykol, 1,3-Propandiol, 1,3-Butandiol, 1,4-Butandiol, 1,6-Hexandiol, Neopentylgylkol, 1,4-Cyclohexandimethanol, 1,4-Cyclohexandiol, Butendiol, Butindiol, hydrierte Bisphenole, Trimethylpentandiol, 1,8-Octandiol und/oder Tricyclodecandimethanol, Trimethylolpropan, ethoxyliertes Trimethylolpropan, propoxyliertes Trimethylolpropan, propoxyliertes Glycerin, ethoxyliertes Glycerin, Glycerin, Pentaerythrit, Rizinusöl, monofunktionelle Alkohole wie z.B. Cyclohexanol, 2-Ethylhexanol, Polyethylenoxide, Polypropylenoxide, Polyethylen/propylenoxidmisch- bzw. Blockcopolymere und Mischungen dieser und/oder anderer Alkohole.

Ein geeigneter Polyesterrohstoff ist auch Caprolacton, der anteilig oder auch als Hauptkomponente zur Herstellung der Polyester b1) eingesetzt werden kann.

Bevorzugte Polyesterrohstoffe sind Adipinsäure, Phthalsäureanhydrid, Tetrahydrophthalsäureanhydrid, Isophthalsäure, Terephthalsäure, Glutarsäure, Sojaölfettsäure, Benzoesäure, 2-Ethylhexansäure, 1,4-Butandiol, Neopentylglykol, 1,2-Propylenglykol, Ethylenglykol, Diethylenglykol,1,6-Hexandiol, Trimethylolpropan, Pentaerythrit, Rizinusöl, Glycerin und deren Mischungen.

Besonders bevorzugt sind Polyester auf Basis von Dicarbonsäuren, die zu mindestens 60 Gew. -%, besonders bevorzugt zu 100 Gew.-% aromatischer Natur sind, insbesondere Phthalsäureanhydrid, Isophthalsäure, Terephthalsäure.

Geeignete niedermolekulare Polyole b2) sind z.B. kurzkettige, d.h. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropyl-ester), Trimethylolethan, Trimethylolpropan oder Glycerin.

Bevorzugte niedermolekulare Polyole b2) sind Diethylenglykol, Ethylenglykol, Butandiol, Dipropylenglykol, 1,2-Propandiol, Neopentylglykol, Trimethylpentandiol, Cyclohexandiol, 1,2 und 1,4-Cyclohexandimethanol, Trimethylolpropan und Glycerin.

Geeignete Polyole b3) sind hydroxylterminierte Polycarbonate, die durch Umsetzung von Diolen oder auch Lacton-modifizierten Diolen oder auch Bisphenolen, wie z.B. Bisphenol A, mit Phosgen oder Kohlensäurediestern wie Diphenylcarbonat oder Dimethylcarbonat zugänglich sind. Beispielhaft seien genannt die polymeren Carbonate des 1,6-Hexandiols, 1,4- Butandiols, TCD-Diols, 1,4-Cyclohexan-dimethanols, 3-Methyl-1,5-Pentandiols, Pentandiols, Dimerdiols, Dodecandiols, Triethylenglykols, Poly-THF 650 bzw. deren Mischungen, sowie die Carbonate von Umsetzungsprodukten der genannten Diole mit ε-Caprolacton im molaren Verhältnis von 1 bis 0,1.

Bevorzugt sind vorstehend genannte Polycarbonatdiole eines zahlenmittleren Molekulargewichts von 600 bis 3000 g/mol und Carbonate von Umsetzungsprodukten des 1,6-Hexandiols mit ε-Caprolacton im molaren Verhältnis von 1 bis 0,33.

Als Polyol b4) geeignete C2- und/oder C3-Polyether sind oligomere bzw. polymere Umsetzungsprodukte von Ethylenoxid und/oder in Form von Homopolymeren, Copolymeren oder auch Block(co)polymeren.

Die zahlenmittleren Molekulargewichte liegen bevorzugt im Bereich von 500 bis 6000 g/mol. Die Funktionalität der Polyether beträgt üblicherweise 1 bis 4, bevorzugt 2 bis 3 und besonders bevorzugt 2.

Als Startermoleküle bzw. Startermolekülmischung kommen die bekannten Alkohole, Aminoalkohole und Amine nach dem Stand der Technik in Frage, wie beschrieben in Ullmanns Encyklopädie der technischen Chemie, Band 19, 4 Auflage, Verlag Chemie GmbH, Weinheim, 1980, s. 31 ff..

Als Polyol b5) geeignete C4-Polyether sind oligomere bzw. polymere Umsetzungsprodukte von Tetrahydrofuran in Form von Homopolymeren, ggf. auch Copolymeren oder Block(co)polymeren mit anderen Monomeren.

Die zahlenmittleren Molekulargewichte liegen bevorzugt im Bereich von 800 bis 4000 g/mol. Die Funktionalität der Polyether beträgt üblicherweise 1 bis 4, bevorzugt 2 bis 3 und besonders bevorzugt 2.

Als Startermoleküle bzw. Startermolekülmischung kommen z.B. die bekannten Alkohole, Aminoalkohole und Amine nach dem Stand der Technik in Frage, wie z.B. beschrieben in Ullmanns Encyklopädie der technischen Chemie, Band 19, 4 Auflage, Verlag Chemie GmbH, Weinheim, 1980, s. 31 ff.

Als Polyether b4) bzw. b5) sind difunktionelle Polyether auf Propylenoxid- und/oder Tetrahydrofuranbasis mit zahlenmittleren Molekulargewichten von 1000 bis 2000 g /mol bevorzugt.

Als weitere Polyole können hydroxylterminierte Polyamidalkohole, hydroxylterminierte Polyolefine auf Ethylen, Propylen, Isopren und/oder Butadienbasis und hydroxylterminierte Polyacrylatdiole, z.B. Tegomer^{®} BD 1000 (Tego GmbH, Essen, DE) eingesetzt werden.

Besonders bevorzugt ist auch der Einsatz einer Mischung aus einem definierten niedermolekularen Polyol b2) und einem oder zwei oligomeren bzw. polymeren Polyolen auf Polyester-, Polycarbonat- und/oder C3- bzw. C4-Polyetherbasis.

Die Verbindungen der Komponente b) werden im erfindungsgemäßen Verfahren typischerweise in Mengen von 3 bis 75 Gew.-%, bevorzugt 8 bis 69 Gew.-% und besonders bevorzugt 10 bis 60 Gew. -% bezogen auf die harnstoffguppenhaltigen, hydroxyfunktionellen Polyurethane eingesetzt.

Geeignete Komponenten c) sind beliebige organische Verbindungen, die mindestens zwei freie Isocyanatgruppen pro Molekül aufweisen.

Geeignet sind Diisocyanate der allgemeinen Formel X(NCO)₂, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht.

Beispiele derartiger Diisocyanate sind Tetramethylendiisocyanat, Methylpentamethylendiisocyanat, Hexamethylendiisocyanat, Dodecamethylendiisocyanat, 1,4-Diisocyanatocyclohexan, 1-Isocyanato-3,3,5-trimethyl-5-isocyanatomethylcyclohexan, 4,4'-Diisocyanatodicyclohexylmethan, 4,4'-Diisocyanatodicyclohexylpropan-(2,2), 1,4-Diisocyanatobenzol, 2,4-Diisocyanatotoluol, 2,6-Diisocyanatotoluol, 4,4'-Diisocyanatodiphenylmethan, 2,2'- und 2,4'-Diisocyanatodiphenylmethan, p-Xylylendiisocyanat, p-Isopropylidendiisocyanat, sowie aus diesen Verbindungen bestehende Gemische.

Ebenfalls möglich ist der Einsatz von monomeren Triisocyanaten wie 4-Isocyanatomethyl-1,8-octandiisocyanat (Nonantriisocyanat).

Neben den vorgenannten monomeren Isocyanaten sind auch die an sich bekannten höhermolekularen Folgeprodukte dieser monomeren Isocyanate mit Uretdion-, Isocyanurat-, Urethan-, Allophanat-, Biuret-, Carbodiimid-, Iminooxadiazindion- und/oder Oxadiazintrionstruktur, wie sie in an sich bekannter Weise durch Modifizierung einfacher aliphatischer, cycloaliphatischer, araliphatischer und/oder aromatischer Diisocyanate erhältlich sind, geeignet.

Bevorzugt basieren die in c) eingesetzten Polyisocyanate auf Hexamethylendiisocyanat, Isophorondiisocyanat, 4,4'-Diisocyanatodicyclohexylmethan, 1-Methyl-2,4-diisocyanatovyclohexan, 1-Methyl-2,6-diisocyanatocyclohexan, 2,4-Diisocyanatotoluol und/oder 2,6-Diisocyanatotoluol.

Besonders bevorzugt wird in c) eine Polyisocyanatkomponente eingesetzt, die mindestens ein Polyisocyanat mit durchschnittlich mehr als 2 Isocyanatgruppen enthält und ferner monomere Diisocyanate enthalten kann.

Bevorzugte dieser Polyisocyanatkomponenten c) sind solche, die aus
c1) 0 bis 95 Gew. -% mindestens eines difunktionellen Isocyanates aus der Gruppe Hexamethylendiisocyanat, Isophorondiisocyanat, 4,4'-Diisocyanatodicyclohexylmethan, 1-Methyl-2,4-diisocyanatocyclohexan, 1-Methyl-2,6-diisocyanatocyclohexan, 2,4-Diisocyanatotoluol und/oder 2,6-Diisocyanatotoluol und
c2) 5 bis 100 Gew. -% mindestens eines Polyisocyanates mit durchschnittlich mehr als 2 Isocyanatgruppen mit Uretdion-, Biuret-, Isocyanurat- , Allophanat-, Carbodiimid-, Iminooxadiazindion-, Oxadiazintrion-, Urethan- und/oder Harnstoffstruktureinheiten bestehen.

Besonders bevorzugt besteht die in c) eingesetzte Polyisocyanatkomponente aus
c1) 27 bis 73 Gew. -% mindestens eines difunktionellen Isocyanates ausgewählt aus der Gruppe Hexamethylendiisocyanat, Isophorondiisocyanat, 2,4-Diisocyanatotoluol und/oder 2,6-Diisocyanatotoluol und 4,4'Disocyanatodicyclohexylmethan und
c2) 73 bis 27 Gew. -% mindestens eines Polyisocyanates mit durchschnittlich mehr als 2 Isocyanatgruppen mit Uretdion-, Biuret-, Isocyanurat- , Allophanat-, Carbodiimid-, Iminooxadiazindion-, Oxadiazintrion-, Urethan- und/oder Harnstoffstruktureinheiten auf Basis von Hexamethylendiisocyanat.

Die Verbindungen der Komponente c) werden im erfindungsgemäßen Verfahren typischerweise in Mengen von 19 bis 70 Gew.-%, bevorzugt 22 bis 65 Gew.-% und besonders bevorzugt 24 bis 60 Gew. -% bezogen auf die harnstoffguppenhaltigen, hydroxyfunktionellen Polyurethane eingesetzt.

Geeignete, ggf. mit zu verwendende Verbindungen der Komponente d) können sein: weitere hydrophile Komponenten wie mono- oder dihydroxyfunktionelle Polyether wie mono- bzw. dihydroxyfunktionelle Ethylenoxidpolyether, mono- bzw. dihydroxyfunktionelle Propylenoxid/Ethylenoxidcopolyether bzw. mono- bzw. dihydroxyfunktionelle Propylenoxid/Ethylenoxidblockpolyether des Molekulargewichtsbereichs 200 bis 3000 g/mol, Hydrazidverbindungen wie Hydrazin oder Adipinsäuredihydrazid, Diamine wie Ethylendiamin, 1,3-Propylendiamin, 1,6-Hexamethylendiamin, Isophorondiamin, 1,3-, 1,4-Phenylendiamin, 4,4'-Diphenylmethandiamin, 4,4'-Dicyclohexylmethandiamin, aminofunktionelle Polyethylenoxide oder Polypropylenoxide, die unter dem Namen Jeffamin^{®}, D-Reihe (Fa. Huntsman Corp. Europe, Belgien) erhältlich sind und auch Triamine wie Diethylentriamin, Monoamine, wie Butylamin, Ethylamin und Amine der Jeffamin^{®} M-Reihe (Huntsman Corp. Europe, Belgien), aminofunktionelle Polyethylenoxide und Polypropylenoxide, ebenfalls geeignet, allerdings weniger bevorzugt sind monofunktionelle Alkohole wie Ethanol, Propanol, Isopropanol, Butanol, sec-Butanol, tert.-Butanol, Pentanol, Hexanol, Octanol, Butylglykol, Butyldiglykol, Methylgykol, Methyldiglykol, Ethylglykol, Ethyldiglykol, Methoxyglykol, Methoxydiglykol, Methoxytriglykol, Methoxypropanol, Cyclohexanol, 2-Ethylhexanol, ebenfalls geeignet sein können C9-C22- Alkohole, die ggf. auch Doppelbindungen enthalten können wie Stearylakohol, Oleylalkohol; Vinylalkohol, Hydroxyethyl(meth)acrylat, Hydroxypropyl(meth)acrylat, Hydroxybutyl(meth)acrylat; Thiole und andere NCO-reaktive Verbindungen und Mischungen der beispielhaft genannten Komponenten d) und auch anderer Verbindungen.

Falls Komponente d) eingesetzt werden, dann bevorzugt die vorstehend beispielhaft genannten hydrophilen Verbindungen auf Polyetherbasis.

Die Verbindungen der Komponente d) werden in Mengen von typischerweise 0 bis 25 Gew.-%, bevorzugt 0 bis 10 Gew.-%, besonders bevorzugt 0 bis 3,5 Gew. -% bezogen auf die harnstoffguppenhaltigen, hydroxyfunktionellen Polyurethane eingesetzt.

Grundsätzlich geeignete Verbindungen der Komponente e) sind Aminoalkohole mit ausschließlich einer primären bzw. ausschließlich einer sekundären Aminogruppe und mindestens einer Hydroxylgruppe, wie Diethanolamin, N-Methylethanolamin, N-Ethylethanolamin, N-Propylethanolamin, Diisopropanolamin, N-Methylisopropanolamin, N-Ethylisopropanolamin, N-Propylisopropanolamin, N-Hydroxyethylaminocyclohexan, N-Hydroxyethylaminobenzol, Umsetzungsprodukte von Monoepoxiden wie z.B Cardura^{®} E10 [Glycidylester der Versaticsäure, Hexion] mit primären oder sekundären Monoaminen wie Ammoniak, Ethylamin, Propylamin, Butylamin, Hexylamin, Cyclohexylamin oder Aminoalkoholen mit primären Aminogruppen wie Ethanolamin, Isopropanolamin, Propanolamin, Umsetzungsprodukte von ungesättigten Verbindungen wie Hydroxyethylacrylat, Hydroxypropylacrylat, Hydroxybutylacrylat Hydroxyethylmethacrylat, Hydroxypropylmethacrylat oder Hydroxybutylmethacrylat im Sinne einer Michaeladdition mit primären oder sekundären Aminen oder mit Aminoalkoholen mit primären Aminogruppen wie Ammoniak, Ethylamin, Propylamin, Butylamin, Hexylamin, Cyclohexylamin, Ethanolamin, Isopropanolamin, Propanolamin, wobei Komponente e) zu mindestens 60 Gew.- % aus Aminoalkoholen mit sekundären Amingruppen besteht.

Bevorzugt werden in Komponente e) mindestens 80 Gew.-% Aminoalkohole mit einer sekundären Aminogruppe und 1 bis 3 Hydroxylgruppen eingesetzt.

Besonders bevorzugt werden in Komponente e) ausschließlich, d.h. zu 100 Gew.-% Aminoalkohole mit ausschließlich einer sekundären Aminogruppe und 1 oder 2 Hydroxylgruppen, wie Diethanolamin, N-Methylethanolamin, N-Ethylethanolamin, Diisopropanolamin, N-Methylisopropanolamin, N-Ethylisopropanolamin eingesetzt.

Die Verbindungen der Komponente e) werden typischerweise in Mengen von 0,7 bis 1,2, bevorzugt von 0,93 bis 1,03 und besonders bevorzugt in Mengen von 0,96 bis 1,0 Equivalenten an Aminogruppen der Verbindungen der Komponente e) zu Equivalenten an Isocyanatgruppen des Prepolymeren, erhalten durch Umsetzung der Komponenten a), b), c) und ggf. d) eingesetzt, um eine möglichst gezielte Umsetzung der Aminogruppen mit den Isocyanatgruppen unter Ausbildung von Harnstoffstrukturen zu erhalten.

Die erfindungswesentliche Umsetzung des NCO-funktionellen Zwischenproduktes aus den Komponenten a), b), c) und ggf. d) mit der Hydroxyaminkomponente e) führt zur Ausbildung von Harnstoffstrukturen.

Zur Herstellung der erfindungsgemäßen harnstoffguppenhaltigen, hydroxyfunktionellen Polyurethane bzw. deren Lösungen, werden die Bestandteile a), b), c) und ggf. d) in einer ein- oder ggf. auch mehrstufigen Synthese, ggf. unter Mitverwendung von Katalysator(en) zu einem isocyanatfunktionellen Zwischenprodukt umgesetzt, gefolgt von der Umsetzung mit der Komponente e) bis der gewünschte Isocyanatgehalt, in der Regel < 0,5, vorzugsweise < 0,1 Gew.-%, erreicht ist. Im Falle der Lösungen erfolgt anschließend das Lösen der harnstoffguppenhaltigen, hydroxyfunktionellen Polyurethane in oder mit Wasser, wobei eine ausreichende Menge an geeignetem Neutralisationsmittel zu jedem beliebigen Zeitpunkt vor oder parallel zum Lösen zugegeben wird, und
wobei ggf. mit verwendetes Lösemittel ganz oder teilweise wieder abdestilliert wird.

Die isocyanatfunktionelle Zwischenstufe wird entweder in Substanz bei 20 bis 170°C oder in organischer Lösung bei Temperaturen von 20 bis 200, bevorzugt 40 bis 90°C durch ein- oder mehrstufige Reaktion der Komponenten a), b), c) und ggf. d) bis der theoretische bzw. der gewünschte Isocyanatgehalt annähernd erreicht oder leicht unterschritten ist, hergestellt, gefolgt von der Umsetzung dieses isocyanatfunktionellen Zwischenproduktes mit der Komponente e) bevorzugt derart, dass Komponente e) ggf. verdünnt mit einem Lösemittel bei 0 bis 50°C vorgelegt wird und das ggf. gelöste isocyanatfunktionelle Zwischenprodukt so zudosiert wird, dass die exotherme Reaktion jederzeit kontrollierbar bleibt. Die Menge an Komponente e) wird dabei bevorzugt so bemessen, dass je freie Isocyanatgruppe des Zwischenproduktes eine Aminogruppe eines Aminoalkohols eingesetzt wird. Die Reaktion wird dann solange durchgeführt, bis der Isocyanatgehalt des Reaktionsprodukts den gewünschten Wert erreicht hat, in der Regel < 0,5 Gew.-%, vorzugsweise < 0,1 Gew.-%, besonders bevorzugt 0 Gew.-%.

Die zur Überführung der Säuregruppen der Verbindungen der Komponente a) notwendigen Neutralisationsmittel können bereits bei der Herstellung des isocyanatfunktionellen Zwischenproduktes eingesetzt werden, wenn die Neutralisationsmittel keine isocyanatfunktionellen Gruppen aufweisen. Grundsätzlich dafür geeignet sind dafür alle Amine die keine primäre oder sekundäre Aminogruppe und keine Hydroxylgruppe enthalten, wie Triethylamin, N-Methylmorpholin, Dimethylcyclohexylamin, Ethyldiisopropylamin, Dimethylisopropylamin bzw. Mischungen dieser und auch anderer entsprechender Amine.

Dabei ist ggf. darauf zu achten, dass zu hohe Mengen an solchen Neutralisationsmitteln während der Umsetzung zu unerwünschten Nebenreaktionen, wie einer übermäßigen Trimerisierung der Verbindungen der Komponente c) führen können. Bevorzugt werden die beispielhaft genannten Neutralisationsmittel deshalb erst nach der Herstellung des isocyanatfunktionellen Zwischenproduktes zugegeben.

Besonders bevorzugt ist die Zugabe der Neutralisationsmittel nach der Umsetzung der isocyanatfunktionellen Zwischenprodukte mit der Aminoalkohol-Komponente e), entweder vor dem Lösen mit / in Wasser oder parallel dazu, z.B. durch Verwendung einer Wasser-/Neutralisationsmittelmischung für den Löseschritt.

Hier können neben den bereits genannten Aminen auch andere Basen, die z.B. frei Amino- und/oder Hydroxylgruppen enthalten, eingesetzt werden, wie z.B. Ammoniak, 2-Aminoethanol, Aminopropanole, 3-Amino-1,2-propandiol, Aminobutanole, 1,3-Diamino-2-propanol, Bis-(2-hydroxypropyl)-amin, Triethanolamin, N-Methyl-diethanolamin, N-Methyldiisopropanolamin, Dimethylethanolamin, Diethylethanolamin, Dimethylisopropanolamin, Morpholin, 2-Aminomethyl-2-Methylpropanol und auch Natriumhydroxid, Lithiumhydroxid, Bariumhydroxid, Kaliumhydroxid und auch Mischungen der genannten und ggf. auch anderer Neutralisationsmittel.

Bevorzugte Neutralisationsmittel sind Ammoniak, Triethylamin, Dimethylethanolamin, Methyldiethanolamin, Triethanolamin, 2-Aminomethyl-2-Methylpropanol, Dimethylcyclohexylamin, Ethyldiisopropylamin, Lithiumhydroxid, Natriumhydroxid, Kaliumhydroxid und deren Mischungen.

Insgesamt wird soviel Neutralisationsmittel zugegeben, dass eine optisch klare bis schwach opake wässrige Lösung erhalten wird. Üblicherweise liegt der Neutralisationsgrad bezogen auf eingebaute Säuregruppen bei mindestens 25 mol%, bevorzugt mindestens 50 mol% und maximal bei 150 mol%. Bei einem Neutralisationsgrad von über 100 mol% liegt dann neben 100% ionischen Salzgruppen noch zusätzlich freies Neutralisationsmittel vor. Besonders bevorzug ist ein Neutralisationsgrad von 50 bis 100 mol%.

Es können auch Mischungen bzw. Kombinationen unterschiedlicher Neutralisationsmittel eingesetzt werden.

Im Falle von kationischen wässrigen Polyurethan Lösungen werden die eingebauten tertiären Aminogruppen mit Säure in die entsprechenden Salze überführt. Grundsätzlich sind dafür alle Säuren geeignet, bevorzugt sind Phosphorsäure, Milchsäure und Essigsäure.

Geeignete Katalysatoren zur Herstellung der erfindungswesentlichen harnstoffguppenhaltigen, hydroxyfunktionellen Polyurethane sind z.B. die in der Isocyanatchemie bekannten Katalysatoren, wie tertiäre Amine, Zinn-, Zink-, Titan-, Zirkon-, Molybdän- oder Wismuthverbindungen, insbesondere Triethylamin, 1,4-Diazabicyclo-[2,2,2]-octan, Zinndioktoat oder Dibutylzinndilaurat. Die Katalysatoren können in Mengen von 0 bis 2 Gew.-%, vorzugsweise von 0 bis 0,5 Gew.-% bezogen auf die Gesamtmenge aller zur Polyurethanherstellung eingesetzten Verbindungen eingesetzt werden.

Das Lösen der harnstoffgruppenhaltigen, hydroxylfunktionellen Polyurethane in Wasser erfolgt entweder durch Zugabe von ggf. erwärmtem Wasser unter Rühren zu dem gegebenenfalls in organischen Lösemitteln gelösten Polyurethan oder aber durch Überführung des gegebenenfalls organische Lösemittel enthaltenden Polyurethans unter Rühren in eine wässrige Vorlage.

Geeignete Lösemittel sind z.B. Aceton, Methylethylketon, Methylisobutylketon, Ne-Methylpyrrolidon, N-Ethylpyrrolidon, Butylglykol, Butyldiglykol, Ethylenglykoldimethylether, Ethylenglykol, Propylenglykol, Dipropylenglykol, Methoxypropanol, Methoxypropylacetat und Mischungen der genannten und auch anderer Lösemittel. Anteilig können auch hydrophobe Lösemittel mitverwendet werden wie aliphatische und oder aromatische Kohlenwasserstoffe bzw. Kohlenwasserstoffgemische wie Solvent Naphta, Toluol u.a.. Bevorzugt wird Aceton als Lösemittel verwendet.

Die erfindungsgemäßen wässrigen Polyurethanlösungen enthalten typischerweise weniger als 20 Gew.-%, bevorzugt weniger als 5 Gew.-% organische Löse-, Dispergier- bzw. Verdünnungsmittel. Besonders bevorzugt sind praktisch lösemittelfrei wässrige Lösungen, im Allgemeinen enthalten diese dann weniger als 1 Gew.-% Lösemittel.

Die zur Herstellung eingesetzten organischen Lösemittel, insbesondere das bevorzugte Aceton, sind häufig nicht in der Lage die erfindungsgemäßen Polyurethane zu lösen. In der Regel erhält man als Zwischenstufe eine nichtwässrige Dispersion des erfindungsgemäßen Polyurethans in dem organischen Medium, insbesondere in Aceton. Dies hat den Vorteil, dass die Viskosität vor dem Dispergierschritt besonders niedrig ist und die Dispergierung vereinfacht wird.

Die Herstellung der erfindungsgemäßen wässrigen Polyurethanlösungen über eine nichtwässrige, organische Dispersion, vorzugsweise in Aceton, als Zwischenstufe ist ein bevorzugter Herstellprozess für die erfindungsgemäßen wässrigen Polyurethane bzw. deren Lösungen.

Nach dem Lösen in/mit Wasser wird das gegebenenfalls vorhandene Lösemittel teilweise, bevorzugt ganz, z.B. durch Anlegen eines leichten Vakuums oder durch Ausblasen mit einem Stickstoffstrom abdestilliert. Dabei ist auch möglich, überschüssiges Wasser mit ab zu destillieren und den Feststoffgehalt der Lösungen weiter zu erhöhen.

Vor, während oder nach dem Löseschritte f) können gegebenenfalls Additive, Hilfsmittel, Lösemittel oder nochmals Neutralisationsmittel zugesetzt werden, wie oberflächenaktive Substanzen, Emulgatoren, Stabilisatoren, Antiabsetzmittel, UV-Stabilisatoren, Katalysatoren für die Vernetzungsreaktion, Photoinitiatoren, Initiatoren, Entschäumer, Antioxidantien, Hautverhinderungsmittel, Verlaufshilfsmittel, Verdicker und/oder Bakterizide.

Man erhält so optisch klare, ggf. auch leicht opake wässrige Lösungen von hydroxyfunktionellen, harnstoffgruppenhaltigen Polyurethanen mit hohen Feststoffgehalten, geringen bis keinen Anteilen an organischen Lösemitteln, ausgezeichneter Hydrolysestabilität auch bei längerer Lagerung, Verdünnungs- und Verarbeitungsverhalten wie organisch gelöste Polymere, welche für vielfältige Anwendungsmöglichkeiten hervorragend geeignet sind. Aufgrund der hohen Feststoffgehalte und des Lösungscharakters ist es z.B. möglich, in einem Arbeitsgang Filme mit besonders hoher störungsfreier, glatter und sehr gut verlaufender Schichtstärke bei Lack- oder Klebstoffen zu erhalten, da im Gegensatz zur Verwendung von Dispersionen keine Koaleszenz von Dispersionsteilchen erforderlich ist und der Feststoffgehalt höher als bei Dispersionen üblich ist.

Die erfindungsgemäßen wässrigen Polyurethan Lösungen weisen typischerweise Feststoffgehalte von 30 bis 80 Gew.-%, bevorzugt 46 bis 75 Gew.-% und besonders bevorzugt 55 bis 75 Gew. % auf.

Die erfindungsgemäßen harnstoffguppenhaltigen, hydroxyfunktionellen Polyurethane bzw. Polyurethan-Polyharnstoffe bzw. deren Lösungen weisen gemäß der nachstehenden Formel rechnerisch ermittelte Molekulargewichte des Polyurethans von 750 bis 30000 g/Mol, vorzugsweise von 850 bis 7500 g/mol und besonders bevorzugt von 1000 bis 3000 g/Mol auf.

### Das Molekulargewicht lässt sich rechnerisch ermitteln gemäß der Formel:

MG = Masse Ansatz / (Mol Isocyanate c) + Mol Hydrophilierungsmittel a) + Mol Polyole b) + Mol Aminoalkohole d) + Mol sonstige Verbindungen e))-Equivalente Isocyanatgruppen = g/mol.

Bevorzugt weisen die erfindungsgemäßen harnstoffguppenhaltigen, hydroxyfunktionellen Polyurethane bzw. deren Lösungen Hydroxylgruppengehalte von 2,5 bis 9 Gew. -% besonders bevorzugt 3 bis 7,5 Gew. -% bezogen auf den Feststoffgehalt der Lösung auf, wobei die OH-Gruppen primärer oder/und sekundärer Natur sein können. Bevorzugt sind primäre Hydroxylgruppen.

Die Säurezahl der erfindungsgemäßen harnstoffguppenhaltigen, hydroxyfunktionellen Polyurethane bzw. deren Lösungen beträgt bevorzugt 2 bis 45 mg KOH/g, bevorzugt 4 bis 28 mg KOH/g und besonders bevorzugt 6 bis 17 mg KOH/g bezogen auf das Polyurethan.

Die erfindungsgemäßen harnstoffguppenhaltigen, hydroxyfunktionellen Polyurethane bzw. deren Lösungen enthalten über die Aminogruppe der Komponente e) erzeugte Harnstoffgruppengehalte von 3 bis 20 Gew.-%, bevorzugt 5 bis 17 Gew.-% und ganz besonders bevorzugt 8 bis 14 Gew. -% bezogen auf die Polyurethane, wobei weitere Harnstoffgruppen, z.B. durch Einsatz harnstoffgruppenhaltiger Polyisocyanatkomponenten c) und/oder den Einsatz von Aminen als Komponente d) und/oder den Einsatz von aminofunktionellen Hydrophilierungsmittel a) in die wässrigen Lösungen der Polyurethane bzw. in die Polyurethane selbst einbracht werden können.

Bei den erfindungsgemäßen wässrigen Polyurethanlösungen handelt sich um wässrige Lösungen mit einer mittleren Teilchengröße von < 200 nm, bevorzugt um klar bzw. opake Lösungen mit einer mittleren Teilchengröße von < 50 nm und besonders bevorzugt um optisch klare Lösungen, für die sich in der Regel keine Teilchengrößen mehr bestimmen lassen.

Die erfindungsgemäßen harnstoffguppenhaltigen, hydroxyfunktionellen Polyurethane bzw. deren Lösungen selbst können alleine oder in Kombination mit anderen wässrigen Lösungen und/oder Dispersionen gegebenenfalls unter Zusatz von mit OH-Gruppen reagierenden Vernetzern in Polyurethansystemen eingesetzt werden.

Ein weiterer Gegenstand der Erfindung sind ferner Polyurethansysteme enthaltend als Komponente A) die erfindungsgemäßen harnstoffguppenhaltigen, hydroxyfunktionellen Polyurethane oder ihre wässrigen Lösungen.

Als Komponente B) können die erfindungsgemäßen Polyurethansysteme Polyisocyanate B) enthalten, die ggf. hydrophil modifiziert sind.

Solche hydrophil modifizierten wasserdispergierbaren oder wasserlöslichen Polyisocyanate können durch Umsetzung von
B1) mindestens einem Polyisocyanat mit aliphatisch, cycloaliphatisch, araliphatisch und/oder aromatisch gebundenen Isocyanatgruppen,
B2) mindestens einer ionischen oder potentiell ionischen und/oder nichtionischen hydrophilierenden Verbindung,
B3) gegebenenfalls einem oder mehreren mehrwertigen Alkoholen und/oder Polyolen und/oder Aminoalkoholen und/oder Polyaminen mit 1 bis 4 Hydroxylgruppen des Molekulargewichtsbereichs 62 bis 2500 g/mol erhalten werden. Für den Einsatz in B) geeignete gegebenenfalls hydrophil modifizierten Polyisocanate B) können gegebenenfalls Stabilisierungsmittel, Emulgatoren und andere Hilfsstoffe sowie gegebenenfalls Lösemittel enthalten.

Die wasserdispergierbaren oder wasserlöslichen Polyisocyanate sind bevorzugt aufgebaut aus 30 bis 98, bevorzugt 50 bis 97, besonders bevorzugt 70 bis 96 Gew. -% der Komponente B1), 1 bis 40 Gew. -%, bevorzugt 2 bis 35 Gew. -%, besonders bevorzugt 3 bis 20 Gew. -% der Komponente B2), 0 bis 60 Gew. -%, bevorzugt 0 bis 45 Gew. -%, besonders bevorzugt 0 bis 30 Gew. -% der Komponente B3).

Die wasserdispergierbaren oder wasserlöslichen Polyisocyanate B) können in den erfindungsgemäßen Beschichtungsmitteln als 100%-ige Substanz oder als organische Lösung oder Dispersion verwendet werden. Die Lösung oder Dispersion der Polyisocyanate weist einen Festkörpergehalt von 10 bis 98, bevorzugt von 50 bis 95 Gew. -% auf.

Geeignete Polyisocyanate B1) zur Herstellung der wasserdispergierbaren oder wasserlöslichen Polyisocyanate B) sind die durch Modifizierung einfacher aliphatischer, cycloaliphatischer, araliphatischer und/oder aromatischer Diisocyanate der vorstehend bei der Beschreibung der Komponente c) genannten Art hergestellten Polyisocyanate mit Uretdion-, Isocyanurat-, Allophanat-, Biuret-,Harnstoff-, Urethan-, Iminooxadiazindion- und/oder Oxadiazintrionstrukturen, wie sie beispielsweise in J. Prakt. Chem. 336 (1994) Seite 185-200 beschrieben sind.

Vorzugsweise werden die wasserdispergierbaren oder wasserlöslichen Polyisocyanate B) auf Basis von aliphatischen bzw. cycloaliphatischen Diisocyanaten , besonders bevorzugt auf Basis von Hexamethylendiisocyanat hergestellt.

Geeignete hydrophilierend wirkende Komponenten B2) sind z.B. Polyoxyalkylenether, die mindestens eine Hydroxy- oder Aminogruppe enthalten. Diese Polyether enthalten einen Anteil von 30 Gew. -% bis 100 Gew. -% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 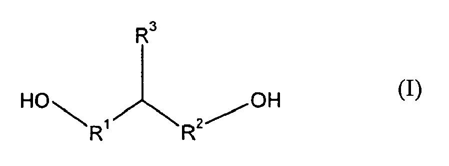 in welcher
- R¹ und R²: unabhängig voneinander jeweils einen zweiwertigen aliphatischen, cycloaliphatischen oder aromatischen Rest mit 1 bis 18 C-Atomen, der durch Sauerstoff und/oder Stickstoffatome unterbrochen sein kann, bedeuten und
- R³: für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt werden Diethylenglykolmono-butylether, Ethylenglykolmonoalkylether, Diethylenglykol-monomethylether und/oder Diethylenglykolmonoethylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol -% bevorzugt zu mindestens 40 mol -% aus Ethylenoxideinheiten bestehen. Bevorzugte nichtionische Verbindungen sind monofunktionelle gemischte Polyalkylenoxidpolyether, die mindestens 40 mol -% Ethylenoxid- und maximal 60 mol -% Propylenoxideinheiten aufweisen.

Geeignete ionische oder potentiell ionische Verbindungen B2) sind z.B. Mono- und Dihydroxycarbonsäuren, Mono- und Diaminocarbonsäuren, Mono- und Dihydroxysulfonsäuren, Mono- und Diaminosulfonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiaminpropyl- oder -butylsulfonsäure, 1,2- oder 1,3-Propylendiaminethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) und Cyclohexylaminopropansulfonsäure. Bevorzugte ionische oder potentielle ionische Verbindungen sind solche, die über Sulfonatgruppen verfügen, insbesondere eingebaut durch Cyclohexyaminopropansulfonsäure.

Ebenfalls geeignet ist die Kombination von verschiedenen hydrophilierenden Komponenten B2), z.B. nichtionische auf Polyethylenoxidbasis und ionische auf Sulfonatbasis.

Die beispielhaft genannten ionischen und nichtionischen hydrophilierenden Komponenten B2) werden durch Reaktion ihrer Hydroxyl- und/oder Aminogruppen mit einem Teil der Isocyanatgruppen der Polyisocyanate umgesetzt. In diesem Fall spricht man auch von einer internen, chemisch eingebundenen Hydrophilierung.

Die Herstellung solcher wasserdispergierbaren Polyisocyanate wird beispielsweise in der EP-A 0 959 087 (Seite 2, Zeilen 25- 46) und EP-A 1 065 228 (Seite 4 Zeile 43 bis Seite 10 Zeile 35) ausführlich erläutert.

Ebenfalls geeignete interne Emulgatoren B2) sind in die in der EP-A 0 703 255 beschriebenen ionisch hydrophilierten wasseremulgierbaren Polyisocyanate, die als Emulgatoren Reaktionsprodukte aus Polyisocyanat und beliebigen hydroxy-, mercapto- oder aminofunktionellen Verbindungen mit mindestens einer schwefelsauren Gruppe bzw. deren Anion enthalten. Als bevorzugte schwefelsaure Aufbaukomponenten zur Herstellung der Emulgatoren werden dabei Hydroxysulfonsäuren mit aliphatisch gebundenen OH-Gruppen oder die Salze solcher Hydroxysulfonsäuren genannt, beispielsweise spezielle Polyethersulfonate, wie sie z.B. unter der Bezeichnung Tegomer^{®} (Th. Goldschmidt AG, Essen, DE) gehandelt werden, Bisulfit-Addukte an ungesättigte Alkohole, Hydroxyethan- und Hydroxypropansulfonsäure sowie Aminosulfobetaine, die sich durch Quarternierung tertiärer Aminoalkohole mit 1,3-Propansulton herstellen lassen. Bevorzugt sind auch 2-(Cyclohexylamino)-ethansulfonsäure und 3-(Cyclohexylamino)-propansulfonsäure oder deren Salze als Hydrophilierungskomponenten.

Geeignete externe Emulgatoren als Bestandteil B2) sind beispielsweise anionische, wie solche auf Alkylsulfat-Basis, Alkylarylsulfonate, Alkylphenolpolyethersulfate wie z.B. in Houben-Weyl, Methoden der organischen Chemie, Erweiterungs- und Folgebände, 4. Auflage, Band E 20, 1987 (Teil 1, Seiten 259 bis 262) angegeben oder Alkylpolyethersulfate oder nichtionische Emulgatoren, wie z.B. die Alkoxylierungs-, bevorzugt Ethoxylierungsprodukte von Alkanolen, Phenolen oder Fettsäuren.

### Geeignete, ggf. mit zu verwendende Komponenten B3) können sein:

Monofunktionelle C1- bis C22-Alkohole, wie z.B. Butanol oder 2-Ethylhexanol, Diole des Molekulargewichts 62 bis 350, wie z.B. Butandiol, Diethylenglykol, Neopentylglykol,Ethylenglykol, Triole wie Trimethylolpropan , Glycerin, di- oder trihydroxyfunktionelle C2-, C3- und/oder C4-Polyether und/oder Polyester und/oder Polycarbonate des Molekulargewichts 400 bis 2500 g/mol, monofunktionelle Amine, Diamine wie Hexamethylendiamin und Hydroxyamine.

Die Polyisocyanatvernetzer B) weisen einen NCO-Gehalt von 1 bis 50 Gew.- %, bevorzugt von 8 bis 30 Gew.- % auf. Sie können gegebenenfalls mit einem gegebenenfalls mit Wasser mischbaren, aber gegenüber Isocyanaten inerten Lösungsmittel verdünnt werden.

Als Polyisocyanatvernetzer B) können ebenfalls hydrophobe, also nicht hydrophil modifizierte Polyisocyanate, wie sie vorstehend als Komponente B1) oder als Umsetzungsprodukte von B1) mit B3) beschrieben wurden, eingesetzt werden. Solche hydrophoben Polyisocyanate weisen üblicherweise eine Viskosität von 100 bis 10000 mPas/ 23°C auf.

Dabei sind solche hydrophoben Polyisocyanate mit einer Viskosität von 500 bis 5000 mPas/23°C bevorzugt.

Bevorzugt sind hydrophobe Polyisocyanate der vorstehend genannten Art mit Isocyanurat-, Biuret-, Uretdion-, Iminooxadizindion-, Urethan-, Harnstoff- und/oder Allophanatstruktureinheiten auf der Basis von (cyclo)aliphatischen Diisocyanaten, insbesondere solche auf der Basis von Hexamethylendiisocyanat.

Bevorzugt sind vorstehend genannte hydrophobe Polyisocyanate mit einer Funktionalität von > 2 insbesondere von > 2,8.

In einer bevorzugten Ausführungsform der Erfindung enthalten die erfindungsgemäßen Polyurethansysteme
A) mindestens ein erfindungsgemäßes harnstoffgruppenhaltiges, hydroxyfunktionelles Polyurethan oder dessen wässrige Lösung, ggf. zusammen mit anderen wässrigen Lösungen und/oder Dispersionen und/oder organisch gelösten bzw. dispergierten Polymeren bzw. Oligomeren und/oder 100%-igen Produkten und
B) mindestens einen Polyisocyanatvernetzer der zu mindestens 75 Gew.-% aus hydrophoben Polyisocyanatvernetzern besteht.

In einer besonders bevorzugten Ausführungsform der Erfindung enthalten die erfindungsgemäßen Polyurethansysteme
A) mindestens ein erfindungsgemäßes harnstoffgruppenhaltiges, hydroxyfunktionelles Polyurethan oder dessen wässrige Lösung, ggf. zusammen mit anderen wässrigen Lösungen und/oder Dispersionen und/oder organisch gelösten bzw. dispergierten Polymeren bzw. Oligomeren und/oder 100%-igen Produkten der vorstehend genannten Art und
B) mindestens einen Polyisocyanatvernetzer der zu 100 Gew.-% aus hydrophoben Polyisocyanatvernetzern auf Hexamethylendiisocyanatbasis besteht.

Selbstverständlich können auch Mischungen verschiedener Polyisocyanate B) eingesetzt werden, insbesondere Mischungen aus einem hydrophilierten und einem nicht hydrophilierten Polyisocyanat oder Mischungen aus einem niedrigviskosen nicht hydrophilierten Polyisocyanat mit niedrigerer Funktionalität und einem höherviskosen nicht hydrophilierten Polyisocyanat mit höherer Funktionalität. Durch solche bevorzugte Kombinationen kann eine optimale, d.h. möglichst niedrige Hydrophile der Komponente B) und ein optimales Mischverhalten eingestellt werden.

Ferner können in den erfindungsgemäßen Polyurethansystemen auch weitere Lösungen oder Dispersionen C) enthalten sein, wie z.B. Dispersionen, die ungesättigte Gruppen enthalten, wie ungesättigte, polymerisierbare Gruppen enthaltende Dispersionen auf Polyester-, Polyurethan-, Polyepoxid-, Polyether-, Polyamid-, Polysiloxan-, Polycarbonat-, Epoxyacrylat-, Polymerisat-, Polyesteracrylat-, Polyurethan-Polyacrylat- und/oder Polyacrylatbasis.

Es können in C) auch Dispersionen z.B. auf Basis von Polyestern, Polyurethanen, Polyepoxiden, Polyethern, Polyamiden, Polyvinylestern, Polyvinylethern, Polysiloxanen, Polycarbonaten, Polymerisaten und/oder Polyacrylaten zugemischt werden, die ebenfalls funktionelle Gruppen wie z.B. Hydroxylgruppen enthalten. Damit können z.B. zwei unterschiedliche hydroxyfunktionelle wässrige Polymere kombiniert werden, z.B. die erfindungsgemäßen, eher niedermolekularen wässrigen Polyurethanlösungen mit relativ hohen Hydroxylgruppengehalten und eher höhermolekulare Polymerdispersionen z.B. auf Polyacrylat- und/oder Polyurethanbasis mit relativ niedrigen Hydroxylgruppengehalten und damit spezielle Effekte z.B. Segmentierung, interprenetrierende Netzwerke usw. erzeugt werden.

Es können in C) auch Dispersionen auf Basis von auf Polyestern, Polyurethanen, Polyepoxiden, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polymerisaten, Polyacrylaten, Polyurethan-Polyacrylat-, Polyesteracrylat-, Polyetheracrylat-, Alkyd-, Polycarbonat-, Polyepoxid-, Epoxyacrylatbasis zugemischt werden, die keine funktionellen Gruppen aufweisen. Damit kann z.B. der Grad der Vernetzungsdichte reduziert werden, die physikalische Trocknung beeinflusst z.B. beschleunigt werden oder eine Elastifizierung bzw. auch eine Haftungsanpassung vorgenommen werden.

Ebenfalls in C) können sogenannte Reaktivverdünner, niedrigviskose Verbindungen mit ungesättigten Gruppen, wie Hexandiolbisacrylat, Trimethylolpropantrisacrylat, Trimethlolpropandiacrylat, Pentaerythrittetraacrylat, Dipentaerythrithexaacrylat, Diepoxidbisacrylate auf Bisphenol A Basis eingesetzt werden.

Die erfindungsgemäßen Polyurethansysteme können ferner vielfältige Additive und Zusatzstoffe enthalten, wie z.B. Stabilisatoren, Initiatoren, Fotoinitiatoren, Antioxidantien, Verlaufsmittel, Peroxide, Hydroperoxide, Entschäumer, Sikkative, Benetzungsmittel, Beschleuniger, und/oder Lichtschutzmittel.

Daneben können sie organische und /oder anorganische Pigmente bzw. Metallic-Pigmente auf der Basis von Aluminiumflocken; Füllstoffe wie beispielsweise Ruß, Kieselsäure, Talkum, Kaolin, Glas als Pulver oder in Form von Fasern, Cellulose und Mischungen dieser und/oder anderer für die Herstellung von Lacken, Beschichtungen und Klebstoffen gebräuchlichen Additive, Hilfsmittel und sonstigen Materialien enthalten.

Die erfindungsgemäßen Polyurethansysteme haben aufgrund der freien reaktiven Gruppen eine begrenzte Verarbeitungszeit von wenigen Minuten bis zu 24 Stunden, in Ausnahmefällen auch länger.

Die Endeigenschaften dieser reaktiven Polyurethansysteme, die Aushärtegeschwindigkeit und auch die Verarbeitungszeit (potlife) können u.a. durch Zusatz von Katalysatoren beeinflusst werde. Geeignet Katalysatoren sind z.B. tertiäre Amine wie z.B. Diazabicyclononan; Diazabicycloundecan, Triethylamin, Ethyldiisopropylamin, Metallverbindungen auf Basis von Zinn, wie z.B. Zinn-II-oktoat, Dibutylzinndilaurat, Zinnchlorid, auf Basis von Zink, Magnesium, Zirkonium, Wismut, Molybdän wie z.B. Lithiummolybdat und auch anderen Metallen. Übliche Einsatzmengen sind 0,001 bis 1 Gew.-% bezogen auf den Festkörpergehalt der Formulierung.

Mit den erfindungsgemäßen Polyurethansysteme können grundsätzlich alle Untergründe lackiert, beschichtet, verfeinert, imprägniert bzw. behandelt werden, wie z.B. mineralische Untergründe, Holz, Holzwerkstoffe, Möbel, Parkett, Türen, Fensterrahmen, metallische Gegenstände, Kunststoffe, Papier, Pappe, Kork. Leder, Kunstleder, Textilien, keramische Materialien, Kompositwerkstoffe aller Art.

Sie eignen sich als Beschichtungsmittel, Dichtstoffe, Tinten, Druckfarben, Schlichten, Haftvermittler und Reaktivverdünner.

Der Auftrag der Polyurethansysteme kann auf bekannte Weise durch Spritzen, Rakeln, Walzen, Rollen, Streichen, Tauchen oder Gießen erfolgen.

Es können so Lacke und Beschichtungen erhalten, die sich durch eine sehr gute Verarbeitbarkeit, Robustheit und auch Gefrierstabilität auszeichnen und zu Beschichtungen mit ausgezeichneter Filmoptik, Fülle und Verlauf, geringer Krateranfälligkeit, guten Beständigkeitseigenschaften und ein ausgeglichenes Härte-/ Elastizitätsniveau auszeichnen.

Die Aushärtung der erfindungsgemäßen Polyurethansysteme kann bei Umgebungstemperatur bis 200°C, vorzugsweise bei 10 bis 80°C erfolgen.

Die Herstellung der erfindungsgemäßen Polyurethansysteme erfolgt durch Mischen der erfindungswesentlichen wässrigen Lösung, ggf. in Kombination mit weiteren wässrigen oder auch organisch gelösten bzw. dispergierten Polymeren bzw. Oligomeren und/oder 100%-igen Produkten mit einem oder mehreren der beschrieben, ggf. auch weiteren Vernetzerharzen. Der Mischvorgang kann dabei einstufig oder mehrstufig, durch Rühren per Hand oder auch durch Einsatz von technischen Hilfsmitteln bzw. Maschinen erfolgen die eine erhöhte Scherwirkung erzeugen und damit eine besondere homogene Mischung bewirken. Geeignete Mischverfahren bzw. Mischaggregate sind z.B. die Düsenstrahldispergierung, Dispergierung durch Dissolver, durch Zwangsmischaggregate, durch Kugel- oder Perlmühlen, durch Statikmischer.

Zur Erzielung besonderer Effekte ist es auch möglich, die erforderlichen Mengen an in der Lackindustrie üblichen Hilfsmitteln bei der Herstellung zuzusetzen, wie oberflächenaktive Substanzen, Emulgatoren, Stabilisatoren, Antiabsetzmittel, UV-Stabilisatoren, Slipadditive, Mattierungsmittel, Katalysatoren für die Vernetzungsreaktion, Entschäumer, Antioxidantien, Antiabsetzmittel, Netzmittel, Weichmacher, Hautverhinderungsmittel, Verlaufshilfsmittel, Verdicker und/oder Bakterizide.

### Beispiele

Sofern nicht abweichend angegeben, sind alle Prozentangaben als Gewichtsprozent zu verstehen.

Die angegebenen Viskositäten wurden gemäß DIN 53229 bei 23°C gemessen.

Die angegebenen NCO-Gehalte wurden gemäß DIN EN ISO 11909 bestimmt.

Die angegebenen Feststoffgehalte wurden gemäß DIN EN ISO 3251 bestimmt.

### Eingesetzte Rohstoffe:

**Desmophen® C 2200** (Bayer MaterialScience AG, Leverkusen, Deutschland), aliphatisches Polycarbonatdiol mit Hydroxylendgruppen, Molekulargewicht 2000 g/Mol, OH-Zahl 56 mg KOH/g Substanz

**Desmodur^{®} N 3300** (Bayer MaterialScience AG, Leverkusen, Deutschland), lösemittelfreies aliphatisches Polyisocyanat mit Isocyanuratstruktureinheiten auf Basis von Hexamethylendiisocyanat, Equivalentgewicht 195 g/Mol

**Desmodur^{®} N 100** (Bayer MaterialScience AG, Leverkusen, Deutschland), lösemittelfreies aliphatisches Polyisocyanat mit Biuretstruktureinheiten auf Basis von Hexamethylendiisocyanat, Equivalentgewicht 190 g/Mol

**Desmodur^{®} N 3400** (Bayer MaterialScience AG, Leverkusen, Deutschland), lösemittelfreies aliphatisches Polyisocyanat mit Uretdionstruktureinheiten auf Basis von Hexamethylendiisocyanat, Equivalentgewicht 191 g/Mol

**Desmodur^{®} Z4400** (Bayer MaterialScience AG, Leverkusen, Deutschland), lösemittelfreies aliphatisches Polyisocyanat mit Isocyanurat Struktureinheiten auf Basis von Isophorondiisocyanat, Equivalentgewicht 252 g/Mol

**Desmodur^{®} 44M** (Bayer MaterialScience AG, Leverkusen, Deutschland), monomeres Diphenylmethan-4,4'diisocyanat, Equivalentgewicht 125 g/Mol

**Desmophen^{®} 2028** (Bayer MaterialScience AG, Leverkusen, Deutschland), Polyesterdiol auf Basis Adipinsäure, 1,6-Hexandiol und Neopentylglykol mit Hydroxylendgruppen , Molekulargewicht 2000, OH-Zahl 56 mg KOH/g Substanz

**Desmophen® 3600** (Bayer MaterialScience AG, Leverkusen, Deutschland); Polypropylenoxiddiol, mit Hydroxylendgruppen, Molekulargewicht 2000 g/Mol, OH-Zahl 56 mg KOH/G Substanz)

**Polyether LP 112** (Bayer MaterialScience AG, Leverkusen, Deutschland); Polypropylenoxiddiol, mit Hydroxylendgruppen, Molekulargewicht 1000 g/Mol, OH-Zahl 112 mg KOH/G Substanz)

**Polyester P200H** (Bayer MaterialScience AG, Leverkusen, Deutschland), Polyesterdiol auf Basis Phthalsäureanhydrid und 1,6-Hexandiol mit Hydroxylendgruppen, Molekulargewicht 2000 g/Mol; OH-Zahl 56 mg KOH/G Substanz

**MPEG 750:** Methoxypolyethylenglykol, Molekulargewicht 750 g/Mol (z.B. Pluriol® 750, BASF AG, Deutschland)

**Terathane**® **2000** (Invista, USA), hydroxyfunktionelles Polytetramethylenglykol, "Poly THF", Molekulargewicht 2000 g/Mol

### Polyurethanlösung 1)

Eine Mischung aus 8,5 g Butandiol, 270 g Polyester P200H und 41,6 g Dimethylolpropionsäure wurde mit 349 g Aceton verdünnt und bei 40°C mit einer Mischung aus 179,8g Isophorondiisocyanat und 315,9 g Desmodur^{®} N 3300 versetzt. Bei 60°C wurde solange gerührt, bis der theoretische NCO-Gehalt von 7,8 % erreicht bzw. leicht unterschritten war. Diese isocyanatfunktionelle Zwischenproduktlösung wurde mit 320 g Aceton verdünnt und dann in ein bei Raumtemperatur vorgelegtes Gemisch aus 162 g N-Methylethanolamin und 148 g Aceton eingerührt und solange bei 50°C gerührt bis der NCO-Gehalt ≤ 0,1%. Man erhielt eine acetonische Lösung eines hydroxyfunktionellen Polyurethanes. Nach Zugabe von 24,9 g Dimethylethanolamin als Neutralisationsmittel wurde durch Zugabe von 600 g entsalztem Wasser dispergiert und das Aceton abdestilliert.

Man erhielt eine klare wässrige, hydroxyfunktionelle Polyurethanlösung mit einem Gehalt an Harnstoffgruppen von 12,6 Gew. -%, einem Hydroxylgruppengehalt von 3,8 Gew. -% (jeweils bezogen auf Feststoffgehalt), einem Feststoffgehalt von 65 Gew. -% und einer Viskosität von 12000 mPas. Die wässrige Polyurethanlösung war praktisch lösemittelfrei bei einem pH-Wert von 7,1.

### Polyurethanlösung 2)

Eine Mischung aus 8,7 g Butandiol, 195 g Desmophen^{®} C2200, 80 g Desmophen^{®} 3600 und 42,4 g Dimethylolpropionsäure wurde mit 353 g Aceton verdünnt und bei 40°C mit einer Mischung aus 183,2 g Isophorondiisocyanat und 315,2 g Desmodur^{®} N 100 versetzt. Bei 60°C wurde solange gerührt, bis der theoretische NCO-Gehalt von 7,8 % erreicht bzw. leicht unterschritten war. Diese isocyanatfunktionelle Zwischenproduktlösung wurde mit 320 g Aceton verdünnt und dann in ein bei Raumtemperatur vorgelegtes Gemisch aus 165 g N-Methylethanolamin und 149 g Aceton eingerührt und solange bei 50°C gerührt bis der NCO-Gehalt = 0. Man erhielt eine acetonische Dispersion eines hydroxyfunktionellen Polyurethanes. Nach Zugabe von 25,3 g Dimethylethanolamin als Neutralisationsmittel wurde durch Zugabe von 900 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 12,7 Gew. -%, einem Hydroxylgruppengehalt von 3,8 Gew. -% (jeweils bezogen auf Feststoffgehalt), einem Feststoffgehalt von 51 Gew. -% und einer Viskosität von 3800 mPas. Die wässrige Polyurethanlösung war praktisch lösemittelfrei, bei einem pH-Wert von 7,8.

### Polyurethanlösung 3)

Eine Mischung aus 7 g Neopentylglykol, 250 g Desmophen^{®} 2028, 11,3 MPEG750 und 40,2 Dimethylolpropionsäure wurde mit 356 g Aceton verdünnt und bei 40°C mit einer Mischung aus 166,5 g Isophorondiisocyanat und 292,5 g Desmodur^{®} N 3300 versetzt. Bei 60°C wurde solange gerührt, bis der theoretische NCO-Gehalt von 7,7% leicht unterschritten war. Diese isocyanatfunktionelle Prepolymerlösung wurde mit 283 g Aceton verdünnt und dann in ein bei Raumtemperatur vorgelegtes Gemisch aus 210 g Diethanolamin und 137 g Aceton eingerührt und solange bei 50°C gerührt bis der NCO-Gehalt = 0. Man erhielt eine blaustichige acetonische Dispersion eines hydroxyfunktionellen Polyurethanes. Nach Zugabe von 19,4 g einer 25%igen wässrigen Ammoniaklösung wurde durch Zugabe von 620 g entsalztem Wasser dispergiert und anschließend das Aceton abdestilliert.

Man erhielt eine klare und farblose wässrige, hydroxyfunktionelle Polyurethanlösung mit einem Gehalt an Harnstoffgruppen von 12,2 Gew. -% und einem Hydroxylgruppengehalt von 7,0 Gew. - % (jeweils bezogen auf Feststoffgehalt). Beim Lagern kann es zu Eintrübung der wässrigen Lösung durch Kristallisation kommen, dies war reversibel und kann durch kurzzeitiges, leichtes Erwärmen wieder beseitigt werden. Die Polyurethan-Lösung hat einen Feststoffgehalt von 61 Gew. - %, eine Viskosität von 7000 mPas, war lösemittelfrei und hat einen pH-Wert von 7,5.

### Polyurethanlösung 4)

Eine Mischung aus 19,5 g Trimethylolpropan, 253,7 g Polyester P 200H und 40,7 g Dimethylolpropionsäure wurde mit 341 g Aceton verdünnt und bei 40°C mit einer Mischung aus 248,9 g Isophorondiisocyanat und 253,1 g Desmodur^{®} N 3300 versetzt. Bei 60°C wurde solange gerührt, bis der theoretische NCO-Gehalt von 8,1 % erreicht war. Diese isocyanatfunktionelle Prepolymerlösung wurde mit 290 g Aceton verdünnt und dann in ein bei Raumtemperatur vorgelegtes Gemisch aus 168,2 g N-Methylethanolamin und 144 g Aceton eingerührt und solange bei ca. 50°C gerührt bis der NCO-Gehalt = 0. Nach Zugabe von 24,3 g Dimethylethanolamin als Neutralisationsmittel wurde durch Zugabe von 850 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 12,7 Gew. -%, einem Hydroxylgruppengehalt von 3,9 Gew. -% (jeweils bezogen auf Feststoffgehalt), einem Feststoffgehalt von 54 Gew. -% und einer Viskosität von 8900 mPas. Die wässrige Polyurethanlösung war klar, farblos und praktisch lösemittelfrei bei einem pH-Wert von 8,6.

### Polyurethanlösung 5)

Eine Mischung aus 13,3 g Neopentylglykol, 289 g Polyester P200A und 31,9 g Dimethylolpropionsäure wurde mit 327 g Aceton verdünnt und bei 40°C mit einer Mischung aus 221 g Isophorondiisocyanat und 209 g Desmodur^{®} N 3300 versetzt. Bei 55°C wurde solange gerührt, bis ein NCO-Gehalt von 7,4% (Theorie 7,8%) erreicht war. Diese isocyanatfunktionelle Prepolymerlösung wurde mit 329 g Aceton verdünnt und dann in ein bei Raumtemperatur vorgelegtes Gemisch aus 144,5 g N-Methylethanolamin und 139 g Aceton eingerührt und solange bei 50°C gerührt bis der NCO-Gehalt = 0. Nach Zugabe von 19,2 g Triethylamin als Neutralisationsmittel wurde durch Zugabe von 790 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 12,4 Gew. -%, einem Hydroxylgruppengehalt von 3,8 Gew. -% (jeweils bezogen auf Feststoffgehalt), einem Feststoffgehalt von 54 Gew. -% und einer Viskosität von 6600 mPas. Die wässrige Polyurethanlösung war klar, farblos und praktisch lösemittelfrei bei einem pH-Wert von 8.

### Polyurethanlösung 6)

Eine Mischung aus 5 g Butandiol, 127,5 g Desmophen^{®} 2028, 127,5 g Polyester P200H und 43,7 g Dimethylolpropionsäure wurde mit 330 g Aceton verdünnt und bei 40°C mit einer Mischung aus 169,8 g Isophorondiisocyanat, 240 g Desmodur^{®} N 3300 und 57 g Desmodur^{®} N100 versetzt. Bei 60°C wurde solange gerührt, bis der theoretische NCO-Gehalt von 7,8% erreicht bzw. leicht unterschritten war. Diese isocyanatfunktionelle Prepolymerlösung wurde mit 300 g Aceton verdünnt und dann in ein bei Raumtemperatur vorgelegtes Gemisch aus 214 g Diethanolamin und 140 g Aceton eingerührt und solange bei 50°C gerührt bis der NCO-Gehalt = 0. Man erhielt eine trübe acetonische Dispersion eines hydroxyfunktionellen Polyurethanes. Nach Zugabe von 21,1g einer 25%-igen wässrigen Ammoniaklösung als Neutralisationsmittel wurde durch Zugabe von 525 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 11,4 Gew. -%, einem Hydroxylgruppengehalt von 7,0 Gew. -% (jeweils bezogen auf Feststoffgehalt), einem Feststoffgehalt von 63 Gew. -% und einer Viskosität von 2400 mPas. Die klare wässrige Polyurethanlösung war praktisch lösemittelfrei bei einem pH-Wert von 7,4.

### Polyurethanlösung 7)

Eine Mischung aus 7,5 g Neopentylglykol, 264 g Desmophen^{®} 2028, und 37 g Dimethylolpropionsäure wurde mit 321 g Aceton verdünnt und bei 40°C mit einer Mischung aus 159,8 g Isophorondiisocyanat und 281 g Desmodur^{®} N 3300 versetzt. Bei 60°C wurde solange gerührt, bis der theoretische NCO-Gehalt von 7,8% erreicht war. Diese isocyanatfunktionelle Prepolymerlösung wurde mit 292 g Aceton verdünnt und dann in ein bei Raumtemperatur vorgelegtes Gemisch aus 50,4 g Diethanolamin, 108 g N-Methylethanolamin und 136 g Aceton eingerührt und solange bei 50°C gerührt bis der NCO-Gehalt = 0. Man erhielt eine blaustichige acetonische Dispersion eines hydroxyfunktionellen Polyurethanes. Nach Zugabe von 17,2g Dimethylethanolamin als Neutralisationsmittel wurde durch Zugabe von 530 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 12 Gew. -%, einem Hydroxylgruppengehalt von 4,5 Gew. -% (jeweils bezogen auf Feststoffgehalt), einem Feststoffgehalt von 64 Gew. -% und einer Viskosität von 7500 mPas. Die klare wässrige Polyurethanlösung war praktisch lösemittelfrei bei einem pH-Wert von 6,5. Die klare Lösung kann nach längerer Lagerung durch Kristallisation trübe werden. Diese Kristallisation war reversibel, durch kurzzeitiges Erwärmen auf ca. 45°C erhielt man wieder eine klare Lösung.

### Polyurethanlösung 8)

Eine Mischung aus 24,2 g Neopentylglykol, 275 g Polyester P200H und 100 ppm Dibutylphosphat wurde mit 345 g Aceton verdünnt und bei 40°C mit einer Mischung aus 183,2 g Isophorondiisocyanat und 321,8 g Desmodur^{®} N 3300 versetzt. Bei 65°C wurde solange gerührt, bis der theoretische NCO-Gehalt von 9,4 % erreicht war. Diese isocyanatfunktionelle Prepolymerlösung wurde mit 313 g Aceton verdünnt und dann in ein bei Raumtemperatur vorgelegtes Gemisch aus 41,2 g N-Methylethanolamin, 146,3 g Diisopropanolamin, 41,2 g einer 45%igen wässrigen Lösung des Natriumsalzes der 2-(2-Aminoethyl)aminoethansulfonsäure und 146 g Aceton eingerührt und solange bei 60°C gerührt bis der NCO-Gehalt = 0. Man erhielt eine acetonische leicht trübe Dispersion eines hydroxyfunktionellen Polyurethanes. Durch Zugabe von 950 g entsalztem Wasser wurde dispergiert und das Aceton abdestilliert.

Man erhielt eine leicht opake wässrige, hydroxyfunktionelle Polyurethanlösung mit einem Gehalt an Harnstoffgruppen von 12,7 Gew. -%, einem Hydroxylgruppengehalt von 5,5 Gew. -% (jeweils bezogen auf Feststoffgehalt), einem Feststoffgehalt von 53 Gew. -% und einer Viskosität von 5000 mPas bei einem pH-Wert von9,9.

### Polyurethanlösung 9)

Eine Mischung aus 8,1 g Neopentylglykol, 245 g eines dihydroxyfunktionellen Polyesters des Molekulargewichts 1380 g/Mol aus Isophthalsäure, Neopentylglykol und Ethylenglykol, sowie 35,5 g Dimethylolpropionsäure wurde mit 328 g Aceton verdünnt und bei 40°C mit einer Mischung aus 173,2 g Isophorondiisocyanat und 304,2 g Desmodur^{®} N 3300 versetzt. Bei 60°C wurde solange gerührt, bis der theoretische NCO-Gehalt von 8 % erreicht bzw. leicht unterschritten war. Diese isocyanatfunktionelle Prepolymerlösung wurde mit 298 g Aceton verdünnt, in ein bei Raumtemperatur vorgelegtes Gemisch aus 156 g N-Methylethanolamin und 139 g Aceton eingerührt und solange bei 55°C gerührt bis der NCO-Gehalt = 0. Nach Zugabe von 20,5 g Dimethylethanolamin als Neutralisationsmittel wurde durch Zugabe von 770 g entsalztem Wasser dispergiert und anschließend das Aceton abdestilliert.

Man erhielt eine opake wässrige, hydroxyfunktionelle Polyurethanlösung mit einem Gehalt an Harnstoffgruppen von 12,6 Gew. -%, einem Hydroxylgruppengehalt von 3,8 Gew. -% (jeweils bezogen auf Feststoffgehalt), einem Feststoffgehalt von 55 Gew. -% und einer Viskosität von 10000 mPas. Die wässrige Polyurethanlösung war praktisch lösemittelfrei bei einem pH-Wert von 8,4.

### Polyurethanlösung 10)

Eine Mischung aus 23,9 g Butandiol, 270,3 g Polyester P200H und 19,5 g Dimethylolpropionsäure wurde mit 333 g Aceton verdünnt und bei 40°C mit einer Mischung aus 175,5 g Isophorondiisocyanat und 288,4 g Desmodur^{®} N 3300 versetzt. Bei 60°C wurde solange gerührt, bis der theoretische NCO-Gehalt leicht unterschritten war. Diese isocyanatfunktionelle Zwischenproduktlösung wurde mit 300 g Aceton verdünnt und dann in ein bei Raumtemperatur vorgelegtes Gemisch aus 214 g Diethanolamin und 141 g Aceton in 30 Minuten eingerührt und solange bei 50°C gerührt bis der NCO-Gehalt ≤ 0,1%. Man erhielt eine acetonische Dispersion eines hydroxyfunktionellen Polyurethanes. Nach Zugabe von 12,9 g Triethylamin als Neutralisationsmittel wurde durch Zugabe von 5200 g entsalztem Wasser dispergiert und das Aceton abdestilliert.

Man erhielt eine klare wässrige, hydroxyfunktionelle Polyurethanlösung mit einem Gehalt an Harnstoffgruppen von 11,7 Gew.-%, einem Hydroxylgruppengehalt von 7,0 Gew. -% (jeweils bezogen auf Feststoffgehalt), einem Feststoffgehalt von 66 Gew. -% und einer Viskosität von 10000 mPas. Die wässrige Polyurethanlösung war praktisch lösemittelfrei bei einem pH-Wert von 6,6

### Polyurethanlösung 11)

Eine Mischung aus 8,5 g Butandiol, 270 g Desmophen^{®} 3600 und 41,6 g Dimethylolpropionsäure wurde mit 349 g Aceton verdünnt und bei 40°C mit einer Mischung aus 179,8 g Isophorondiisocyanat und 315,9 g Desmodur^{®} N 3300 versetzt. Bei 60°C wurde solange gerührt, bis der theoretische NCO-Gehalt von 7,8 % erreicht war. Diese isocyanatfunktionelle Zwischenproduktlösung wurde mit 200 g Aceton verdünnt und dann in ein bei Raumtemperatur vorgelegtes Gemisch aus 162 g N-Methylethanolamin und 148 g Aceton in 30 Minuten eingerührt und solange bei 50°C gerührt bis der NCO-Gehalt = 0%. Man erhielt eine acetonische blaustichige Dispersion eines hydroxyfunktionellen Polyurethanes. Nach Zugabe von 28,2 g Triethylamin als Neutralisationsmittel wurde durch Zugabe von 700 g entsalztem Wasser dispergiert und das Aceton abdestilliert.

Man erhielt eine klare wässrige, hydroxyfunktionelle Polyurethanlösung mit einem Gehalt an Harnstoffgruppen von 12,2 Gew. -%, einem Hydroxylgruppengehalt von 3,8 Gew. -% (jeweils bezogen auf Feststoffgehalt), einem Feststoffgehalt von 55 Gew. -% und einer Viskosität von 2000 mPas. Die wässrige Polyurethanlösung war praktisch lösemittelfrei bei einem pH-Wert von 7,1

### Polyurethanlösung 12)

### Vergleich: Einsatz eines Triols (Trimethylolpropan) anstelle eines Aminoalkohols mit sekundärer Aminogruppe als Komponente d)

Eine Mischung aus 7,4 g Butandiol, 275 g Desmophen^{®} 2028 und 40,3 g Dimethylolpropionsäure wurde mit 339 g Aceton verdünnt und bei 40°C mit einer Mischung aus 169,8 g Isophorondiisocyanat und 298,4 g Desmodur^{®} N 3300 versetzt. Bei 60°C wurde solange gerührt, bis der theoretische NCO-Gehalt von 7,6% erreicht war. Diese isocyanatfunktionelle Prepolymerlösung wurde mit 144 g Aceton verdünnt und dann in ein bei Raumtemperatur vorgelegtes Gemisch aus 273 g Trimethylolpropan und 308 g Aceton eingerührt und solange bei 50°C gerührt bis der NCO-Gehalt = 0. Ca 3 Stunden nach Start dieser Reaktion kommt es zum Gelieren des Ansatzes.

Durch Einsatz eines Triols als Komponente d) anstelle eines Aminoalkohols mit sekundärer Aminogruppe war es auf diesem Weg nicht möglich, wässrige hydroxyfunktionelle Polyurethanlösungen herzustellen.

### Polyurethanlösung 13)

### Vergleich: Einsatz eines Aminoalkohols mit primärer Aminogruppen anstelle eines Aminoalkohols mit sekundärer Aminogruppe als Komponente d)

Eine Mischung aus 8,7 g Butandiol, 275 g Desmophen^{®} C2200 und 42,4 Dimethylolpropionsäure wurde mit 356 g Aceton verdünnt und bei 40°C mit einer Mischung aus 183,2 g Isophorondiisocyanat und 321,8 g Desmodur^{®} N 3300 versetzt. Bei 60°C wurde solange gerührt, bis der theoretische NCO-Gehalt von 7,8% erreicht bzw. leicht unterschritten war. Diese isocyanatfunktionelle Prepolymerlösung wurde mit 323 g Aceton verdünnt und dann in ein bei Raumtemperatur vorgelegtes Gemisch aus 136,6 g Ethanolamin und 154 g Aceton eingerührt und solange bei 50°C gerührt bis der NCO-Gehalt = 0. Man erhielt eine acetonische Dispersion eines hydroxyfunktionellen Polyurethanes. Nach Zugabe von 25,3 g Dimethylethanolamin als Neutralisationsmittel wurde durch Zugabe von 575 g entsalztem Wasser dispergiert und anschließend das Aceton abdestilliert.

Man erhielt eine klare wässrige, hydroxyfunktionelle Polyurethanlösung mit extrem hoher Viskosität, die durch Zugabe von weiteren 1050 g Wasser verdünnt werden muss, um bei Raumtemperatur fließfähig zu sein. Die so hergestellte, braun gefärbte wässrige Polyurethanlösung hat einen Feststoffgehalt von lediglich 35 Gew. -%, eine Viskosität von 8500 mPas und einen Hydroxylgruppengehalt von 3,8 Gew. -% (jeweils bezogen auf Feststoffgehalt).

Dieser Vergleichsversuch zeigt die Nachteile der Verwendung eines Aminoalkohols d) mit primären Aminogruppen anstelle der Verwendung von Aminoalkoholen mit sekundären Aminogruppen. Es werden wässrige Lösungen mit sehr niedrigem Feststoffgehalt und starker Verfärbung erhalten. Es war deshalb nicht empfehlenswert, ausschließlich Aminoalkohole mit primärer Aminogruppe zu verwenden, die Mitverwendung in untergeordneten Mengen war möglich, jedoch nicht bevorzugt.

### Polyurethanlösung 14)

### Vergleich: Verwendung eines Triamins anstelle eines Aminoalkohols mit sekundärer Aminogruppe als Komponente d)

Eine Mischung aus 8,8 g Butandiol, 260 g Desmophen^{®} C2200 und 39,2 Dimethylolpropionsäure wurde mit 336 g Aceton verdünnt und bei 40°C mit einer Mischung aus 173,2 g Isophorondiisocyanat und 304,2 g Desmodur^{®} N 3300 versetzt. Bei 60°C wurde solange gerührt, bis der theoretische NCO-Gehalt von 7,8% erreicht war. Diese isocyanatfunktionelle Prepolymerlösung wurde mit 306 g Aceton verdünnt und dann in ein bei Raumtemperatur vorgelegtes Gemisch aus 209 g Diethylentriamin und 143 g Aceton eingerührt, dabei kommt es sofort zu starken Ausfällung und Vernetzungsreaktionen.

Dieser Vergleichsversuch zeigt, dass es nicht möglich war, durch Verwendung eines Triamins anstelle einer Aminoalkohol Komponente d) mit einer sekundären Aminogruppe entsprechende wässrige Polyurethanlösungen herzustellen.

### Polyurethanlösung 15)

### Vergleich: Verwendung eines Diols (Propylenglykol) anstelle eines Aminoalkohols mit sekundärer Aminogruppe als Komponente d)

Eine Mischung aus 3,9 g Butandiol und 346,8 Desmophen^{®} 2028 und 39,3 g Dimethylolpropionsäure wurde mit 368 g Aceton verdünnt und bei 40°C mit einer Mischung aus 169,8 g Isophorondiisocyanat und 298,4 g Desmodur^{®} N 3300 versetzt. Bei 60°C wurde solange gerührt, bis der theoretische NCO-Gehalt von 7,0% erreicht war. Diese isocyanatfunktionelle Prepolymerlösung wurde mit 334 g Aceton verdünnt und dann in ein bei Raumtemperatur vorgelegtes Gemisch aus 155 g 1,2-Propylenglykol und 156 g Aceton eingerührt und solange bei 50°C gerührt bis der NCO-Gehalt = 0. Man erhielt eine acetonische Lösung eines hydroxyfunktionellen Polyurethanes. Nach Zugabe von 23,5 g Triethylamin als Neutralisationsmittel wurde durch Zugabe von insgesamt 2200 g entsalztem Wasser dispergiert und anschließend das Aceton abdestilliert.

Man erhielt eine trübe wässrige, sehr viele Gelteilchen aufweisende hydroxyfunktionelle Polyurethan-Dispersion mit einem Hydroxylgruppengehalt von 3,4 Gew. -% (bezogen auf Feststoffgehalt), einem Feststoffgehalt von lediglich 32 Gew. -% und einer Viskosität von 5000 mPas.

Dieser Vergleichsversuch zeigt, dass es nicht möglich war, durch Verwendung eines Diols mit einer primären und einer sekundären Hydroxylgruppe anstelle einer Aminoalkohol Komponente d) mit einer sekundären Amingruppe entsprechende, klare, homogene und keine Gelteilchen enthaltende wässrige Polyurethanlösungen mit hohen Feststoffgehalten herzustellen.

### Polyurethanlösung 16)

Eine Mischung aus 8,4 g Neopentylglykol, 300 g Desmophen^{®} 2028, 13,5 g MPEG 750 und 48,2 g Dimethylolpropionsäure wurde mit 389 g Aceton verdünnt und bei 40°C mit einer Mischung aus 199,8 g Isophorondiisocyanat und 305,4 g Desmodur^{®} N 3300 versetzt. Bei 60°C wurde solange gerührt, bis der theoretische NCO-Gehalt von 7,7 % erreicht war. Diese isocyanatfunktionelle Prepolymerlösung wurde mit 340 g Aceton verdünnt und dann in ein bei Raumtemperatur vorgelegtes Gemisch aus 252 g Diethanolamin und 165 g Aceton eingerührt und solange bei 50°C gerührt bis der NCO-Gehalt = 0. Man erhielt eine acetonische, trüb-weiße Dispersion eines hydroxyfunktionellen Polyurethanes. Nach Zugabe von 30,4 g Dimethylethanolamin als Neutralisationsmittel wurde durch Zugabe von 650 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 11,4 Gew. -% und einem Hydroxylgruppengehalt von 7.0 Gew. -% (jeweils bezogen auf Feststoffgehalt). Die wässrige Polyurethan-Lösung kann beim längeren Lagern durch beginnende Kristallisation eintrüben, dies kann durch kurzzeitiges leichtes Erwärmen wieder beseitigt werden. Die Polyurethan-Lösung hat einen Feststoffgehalt von 63 Gew. -%, eine Viskosität von 3000 mPas, war klar, farblos und praktisch lösemittelfrei bei einem pH-Wert von 7,4.

### Polyurethanlösung 17)

Eine Mischung aus 12,9 g Neopentylglykol, 110 g Desmophen^{®} 2028, 165 g Polyester P200H und 38,7 g Dimethylolpropionsäure wurde mit 288 g Aceton verdünnt und bei 40°C mit einer Mischung aus 174 g Isophorondiisocyanat, 219,9 g Desmodur^{®} N 100 und 116,8 g Desmodur^{®} N3400 versetzt. Bei 60°C wurde solange gerührt, bis der theoretische NCO-Gehalt von 8,2 % erreicht war. Diese isocyanatfunktionelle Prepolymerlösung wurde mit 97 g Aceton verdünnt und dann in ein bei Raumtemperatur vorgelegtes Gemisch aus 82,5 g N-Methylethanolamin, 115,5 g Diethanolamin und 122 g Aceton eingerührt und solange bei 50°C gerührt bis der NCO-Gehalt = 0. Nach Zugabe von 26,2 g Triethylamin als Neutralisationsmittel wurde durch Zugabe von 750 g entsalztem Wasser dispergiert und anschließend das Aceton abdestilliert.

Man erhielt eine klare wässrige, hydroxyfunktionelle Polyurethanlösung mit einem Gehalt an Harnstoffgruppen von 11,8 Gew. -%, einem Hydroxylgruppengehalt von 5,4 Gew. -% (jeweils bezogen auf Feststoffgehalt), einem Feststoffgehalt von 57 Gew. -% und einer Viskosität von 13000 mPas. Die wässrige Polyurethanlösung war klar, farblos und praktisch lösemittelfrei bei einem pH-Wert von 8,5.

### Polyurethanlösung 18)

Eine Mischung aus 6,7 g Neopentylglykol, 118,8 g Desmophen^{®} 2028, 118,8 g Polyester P200H und 38,2 g Dimethylolpropionsäure wurde mit 308 g Aceton verdünnt und bei 40°C mit einer Mischung aus 138,2 g Isophorondiisocyanat, 15,1g Hexamethylendiisocyanat und 278 g Desmodur^{®} N 3300 versetzt. Bei 60°C wurde solange gerührt, bis der theoretische NCO-Gehalt von 7,7 % erreicht war. Diese isocyanatfunktionelle Prepolymerlösung wurde mit 269 g Aceton verdünnt und dann in ein bei Raumtemperatur vorgelegtes Gemisch aus 252,7 g Diisopropanolamin und 130 g Aceton eingerührt und solange bei 50°C gerührt bis der NCO-Gehalt = 0. Man erhielt eine blaustichige acetonische Dispersion des hydroxyfunktionellen Polyurethans. Nach Zugabe von 24,1 g Triethylamin als Neutralisationsmittel wurde durch Zugabe von 520 g entsalztem Wasser dispergiert und anschließend das Aceton abdestilliert.

Man erhielt eine optisch klare wässrige, hydroxyfunktionelle Polyurethanlösung mit einem Gehalt an Harnstoffgruppen von 10,8 Gew. -% und einem Hydroxylgruppengehalt von 6,6 Gew. -% (jeweils bezogen auf Feststoffgehalt). Die Polyurethan-Lösung kann beim Lagern eintrüben, dies war jedoch reversibel und kann z.B. durch leichtes Erwärmen wieder beseitigt werden. Die Polyurethan-Lösung hat einem Feststoffgehalt von 64 Gew. -%, eine Viskosität von 12000 mPas, war farblos und praktisch lösemittelfrei bei einem pH-Wert von 7,6.

### Polyurethanlösung 19)

Eine Mischung aus 16,4 g Butandiol, 225 g Polyester P200H und 27,5 g Dimethylolpropionsäure wurde mit 321 g Aceton verdünnt und bei 40°C mit einer Mischung aus 166,5 g Isophorondiisocyanat, 98,8 g Desmodur^{®} Z 4400 und 214,5 g Desmodur^{®} N 3300 versetzt. Bei 60°C wurde solange gerührt, bis der theoretische NCO-Gehalt von 7,85 % erreicht war. Diese isocyanatfunktionelle Prepolymerlösung wurde mit 291 g Aceton verdünnt und dann in ein bei Raumtemperatur vorgelegtes Gemisch aus 11,1 g Diethanolamin, 142,5 g N-Methylethanolamin und 136 g Aceton eingerührt und solange bei 50°C gerührt bis der NCO-Gehalt = 0. Man erhielt eine nahezu klare acetonische Dispersion des hydroxyfunktionellen Polyurethans. Nach Zugabe von 16,6 g Dimethylethanolamin als Neutralisationsmittel wurde durch Zugabe von 750 g entsalztem Wasser dispergiert und das Aceton abdestilliert.

Man erhielt eine optisch klare wässrige, hydroxyfunktionelle Polyurethanlösung mit einem Gehalt an Harnstoffgruppen von 11,7 Gew. -%, einem Hydroxylgruppengehalt von 4,0 Gew. -% (jeweils bezogen auf Feststoffgehalt), einem Feststoffgehalt von 55 Gew. -% und einer Viskosität von 12000 mPas. Die wässrige Polyurethanlösung war farblos und praktisch lösemittelfrei bei einem pH-Wert von 7,5.

### Polyurethanlösung 20)

Eine Mischung aus 66,3 g Neopentylglykol und 28,5 g Dimethylolpropionsäure wurde mit 315 g Aceton verdünnt und bei 40°C mit einer Mischung aus 142,8 g Hexamethylendiisocyanat und 497 g Desmodur^{®} N 3300 versetzt. Bei 60°C wurde solange gerührt, bis der theoretische NCO-Gehalt von 10,2 % erreicht war. Diese isocyanatfunktionelle Prepolymerlösung wurde mit 286 g Aceton verdünnt und dann in ein bei Raumtemperatur vorgelegtes Gemisch aus 268 g Diethanolamin und 134 g Aceton eingerührt und solange bei 50°C gerührt bis der NCO-Gehalt = 0. Man erhielt eine relativ grobteilige acetonische Dispersion des hydroxyfunktionellen Polyurethans. Nach Zugabe von 3,3 g Ammoniak als Neutralisationsmittel wurde durch Zugabe von 520 g entsalztem Wasser dispergiert und das Aceton abdestilliert.

Man erhielt eine optisch klare wässrige, hydroxyfunktionelle Polyurethanlösung mit einem Gehalt an Harnstoffgruppen von 14,5 Gew. -%, einem Hydroxylgruppengehalt von 8,6 Gew. -% (jeweils bezogen auf Feststoffgehalt), einem Feststoffgehalt von 67 Gew. -% und einer Viskosität von 13000 mPas. Die wässrige Polyurethanlösung war farblos und praktisch lösemittelfrei bei einem pH-Wert von 7,1.

### Polyurethanlösung 21)

Eine Mischung aus 270 g Polyester P200H und 47,8 g N-Methyldiethanolamin wurde mit 412 g Aceton verdünnt und bei 40°C mit einer Mischung aus 179,8 g Isophorondiisocyanat und 315,9 g Desmodur^{®} N 3300 versetzt. Bei 55 bis 60°C wurde solange gerührt, bis der theoretische NCO-Gehalt von 7,4 % erreicht war. Diese isocyanatfunktionelle Prepolymerlösung wurde mit 139 g Aceton verdünnt und dann in ein bei Raumtemperatur vorgelegtes Gemisch aus 121,5 g N-Methylethanolamin, 56,7 g Diethanolamin und 151 g Aceton eingebracht und solange bei 55°C gerührt bis der NCO-Gehalt = 0. Nach Zugabe von 40 g 85%-iger wässriger Phosphorsäure als Neutralisationsmittel wurde durch Zugabe von 1100 g entsalztem Wasser dispergiert und das Aceton abdestilliert.

Man erhielt eine leicht opake wässrige, hydroxyfunktionelle Polyurethanlösung mit einem Gehalt an Harnstoffgruppen von 13,3 Gew. -%, einem Hydroxylgruppengehalt von 4,6 Gew. -% (jeweils bezogen auf Feststoffgehalt), einem Feststoffgehalt von 47 Gew. -% und einer Viskosität von 1000 mPas. Die wässrige Polyurethanlösung war farblos, praktisch lösemittelfrei. Der pH-Wert der wässrigen Lösung war 5,8.

### Polyurethanlösung 22)

Eine Mischung aus 132,5 g Polyether LP112, 132,5 g Terathane® 2000 und 44,4 g Dimethylolpropionsäure wurde mit 351 g Aceton verdünnt und bei 40°C mit einer Mischung aus 198,8 Desmodur^{®} M44 und 310 g Desmodur^{®} N 3300 versetzt. Bei 60°C wurde solange gerührt, bis der theoretische NCO-Gehalt von 7,56% erreicht war. Diese isocyanatfunktionelle Prepolymerlösung wurde mit 321 g Aceton verdünnt und dann in ein bei Raumtemperatur vorgelegtes Gemisch aus 11,1 g Diisopropanolamin, 146,5 g N-Methylethanolamin und 150 g Aceton eingerührt und solange bei 50°C gerührt bis der NCO-Gehalt = 0. Man erhielt eine nahezu blaustichige acetonische Dispersion des hydroxyfunktionellen Polyurethans. Nach Zugabe von 33,5 g Dimethylethanolamin als Neutralisationsmittel wurde durch Zugabe von 890g entsalztem Wasser dispergiert und das Aceton abdestilliert.

Man erhielt eine optisch klare wässrige, hydroxyfunktionelle Polyurethanlösung mit einem Gehalt an Harnstoffgruppen von 12 Gew. -%, einem Hydroxylgruppengehalt von 3,7 Gew. -% (jeweils bezogen auf Feststoffgehalt), einem Feststoffgehalt von 50 Gew. -% und einer Viskosität von 10000 mPas. Die wässrige Polyurethanlösung war farblos und praktisch lösemittelfrei bei einem pH-Wert von 8,0.

### Polyurethanlösung 23)

Eine Mischung aus 270 g Polyester P200A, 8,5 g Butandiol und 41,6 g Dimethylolpropionsäure wurde mit 350 g Aceton verdünnt und bei 40°C mit einer Mischung aus 179,8 Isophorondiisocyanat und 316 g Desmodur^{®} N 3300 versetzt. Bei 60°C wurde solange gerührt, bis der theoretische NCO-Gehalt von 7,8 % erreicht war. Diese isocyanatfunktionelle Prepolymerlösung wurde mit 318 g Aceton verdünnt und dann in ein bei Raumtemperatur vorgelegtes Gemisch aus 162 g N-Methylethanolamin und 150 g Aceton eingerührt und solange bei 50°C gerührt bis der NCO-Gehalt = 0. Man erhielt eine trübe acetonische Dispersion des hydroxyfunktionellen Polyurethans. Nach Zugabe von 24,9 g Dimethylethanolamin als Neutralisationsmittel wurde durch Zugabe von 750g entsalztem Wasser dispergiert und das Aceton abdestilliert.

Man erhielt eine optisch klare wässrige, hydroxyfunktionelle Polyurethanlösung mit einem Gehalt an Harnstoffgruppen von 12,3 Gew. -%, einem Hydroxylgruppengehalt von 3,8 Gew. -% (jeweils bezogen auf Feststoffgehalt), einem Feststoffgehalt von 57 Gew. -% und einer Viskosität von 7000 mPas. Die wässrige Polyurethanlösung war farblos und praktisch lösemittelfrei bei einem pH-Wert von 8,9.

### Polyurethanlösung 24)

Eine Mischung aus 500 g Polyester P200A 33,5 g Dimethylolpropionsäure wurde mit 375 g Aceton verdünnt und bei 40°C mit einer Mischung aus 180,4 Isophorondiisocyanat und 161 g Desmodur^{®} N 3300 versetzt. Bei 60°C wurde solange gerührt, bis der theoretische NCO-Gehalt von 4,9 % erreicht war. Diese isocyanatfunktionelle Prepolymerlösung wurde mit 340 g Aceton verdünnt und dann in ein bei Raumtemperatur vorgelegtes Gemisch aus 109 g N-Methylethanolamin und 159 g Aceton eingerührt und solange bei 50°C gerührt bis der NCO-Gehalt = 0. Man erhielt eine acetonische Dispersion des hydroxyfunktionellen Polyurethans. Nach Zugabe von 19,3 g Triethylamin als Neutralisationsmittel wurde durch Zugabe von 900g entsalztem Wasser dispergiert und das Aceton abdestilliert.

Man erhielt eine optisch klare wässrige, hydroxyfunktionelle Polyurethanlösung mit einem Gehalt an Harnstoffgruppen von 8,2 Gew. -%, einem Hydroxylgruppengehalt von 2,5 Ge w. -% (jeweils bezogen auf Feststoffgehalt), einem Feststoffgehalt von 50 Gew. -% und einer Viskosität von 1500 mPas. Die wässrige Polyurethanlösung war farblos und praktisch lösemittelfrei bei einem pH-Wert von 6,6.

### Anwendungstechnische Prüfungen:

Vernetzer I): Desmodur^{®} XP 2410 (Polyisocyanatvernetzer auf Basis von Hexamethylendiisocyanat mit Iminooxadizindion Struktureinheiten; Bayer MaterialScience, Leverkusen, Germany; 100%-ig; Isocyanatgehalt ca. 24,0 %)
Vernetzer II): Bayhydur^{®} 304 (Nichtionisch hydrophilierter Polyisocyanatvernetzer auf Basis von Hexamethylendiisocyanat; Bayer MaterialScience, Leverkusen, Germany; 100%-ig; Isocyanatgehalt ca. 18,2 %)
Vernetzer III): Desmodur^{®} N 3390 (Polyisocyanatvernetzer auf Basis von Hexamethylendiisocyanat mit Isocyanurat Struktureinheiten; Bayer MaterialScience, Leverkusen, Germany; 90%-ig in Butylacetat; Isocyanatgehalt ca. 19,6 %)
Vernetzer IV): Desmodur^{®} N 3400 (Polyisocyanatvernetzer auf Basis von Hexamethylendiisocyanat mit Uretdion Struktureinheiten; Bayer MaterialScience, Leverkusen, Germany; 100%-ig; Isocyanatgehalt ca. 21,8 %)
Vernetzer V): Bayhydur^{®} XP 2655 (Ionisch hydrophilierter Polyisocyanatvernetzer auf Basis von Hexamethylendiisocyanat; Bayer MaterialScience, Leverkusen, Germany; 100%-ig)
Vernetzer VI): Desmodur^{®} N 3300 (Polyisocyanatvernetzer auf Basis von Hexamethylendiisocyanat mit Isocyanurat Struktureinheiten; Bayer MaterialScience, Leverkusen, Germany; 100%-ig; Isocyanatgehalt ca. 12,6 %)

### 1) Prüfung Gefrierstabilität

a) Die beiden wässrigen Polyurethanlösungen 1) und 2) werden einem Tiefgefrierzyklus unterzogen. Dabei werden Proben in Glasflaschen für 1 Stunde bei -78°C in Trockeneis eingefroren und dann für 3 Stunden bei Raumtemperatur wieder aufgetaut. Dieser Zyklus wurde fünfmal wiederholt. Beide Lösungen überstehen diese Prozedur völlig unbeschadet, es konnten keine Veränderungen beobachtet bzw. gemessen werden.
b) Die wässrigen Polyurethanlösungen 1), 2), 4), 10), 20) und 21) werden für 3 Wochen im Kühlschrank bei 0 bis 4°C gelagert und anschließend wieder auf Raumtemperatur erwärmt. Alle Lösungen überstehen diese Lagerung völlig unbeschadet, es konnten keine Veränderungen beobachtet bzw. gemessen werden.
c) Die wässrigen Polyurethanlösungen 1), 2) und 11) werden einem Gefrierfach in Glasflaschen für 2 Wochen bei -10 bis -12°C eingefroren und dann wieder aufgetaut. Alle Lösungen überstehen diese Prozedur völlig unbeschadet, es konnten keine Veränderungen beobachtet bzw. gemessen werden.

Insgesamt gesehen, weisen die erfindungsgemäßen wässrigen Polyurethanlösungen eine ausgezeichnete Gefrierstabilität auf und unterscheiden sich dadurch von nahezu allen wässrigen Dispersionen, die ein Gefrieren nicht ohne Produktschädigung überstehen.

### 2) Prüfung als Klarlack in Kombination mit einem niedrigviskosen hydrophoben bzw. mit einem hydrophilierten Polyisocyanatvernetzer auf Basis von Hexamethylendiisocyanat.

Die Polyurethanlösungen wurden in den angegebenen Mengen mit dem jeweiligen Vernetzer, dem Lösemittel und ggf. dem Katalysator vermischt, bei 2000 U/min für 2 Minuten homogenisiert und dann durch Zugabe von destilliertem Wasser auf eine Auslaufzeit im DIN 4 Becher von 25 Sekunden eingestellt.

| (Mengen in g) | **2a** | **2b** | **2c** |
|---|---|---|---|
| **Polyurethanlösung 7)** | 38,5 | | |
| **Polyurethanlösung 8)** | | 63 | |
| **Polyurethanlösung 1)** | | | 72,2 |
| Lithiummolybdat 5%ige Lösung | 0,2 | -- | -- |
| **Vernetzer I)** | | 26,9 | 26,9 |
| **Vernetzer II)** | 34,5 | -- | -- |
| Verdünnt mit 3-Methoxy-n-Butylacetat | 8,6 | 6,7 | 6,7 |
| Pendelsekunden nach 30' 60°C und 2h RT Trocknung | -- | 26 s | 62 s |
| Pendelsekunden nach 1d RT Trocknung | -- | 93 s | 96 s |
| Pendelsekunden nach 2d RT Trocknung | -- | 132 s | 161 s |
| Pendelsekunden nach 5d RT Trocknung | -- | 162 s | 158 s |
| Pendelsekunden nach 7d RT Trocknung | -- | 159 s | 155 s |
| Filmtransparenz (bei allen Trocknungsbedingungen) | klar | klar | klar |
| Optischer Eindruck der Klarlacke - Fülle | exzellent | exzellent | exzellent |
| Optischer Eindruck der Klarlacke - Verlauf | sehr gut | sehr gut | sehr gut |
| Optischer Eindruck der Klarlacke - Oberflächenstörungen | keine | keine | keine |

Obwohl es sich um ganz einfache Klarlackrezepturen handelt, ohne jedes Additiv, erhielt man Beschichtungen mit exzellenten filmoptischen Eigenschaften, insbesondere bezüglich Fülle, Verlauf und Oberflächendefekten. Die Einarbeitung der Härter war problemlos, man erhielt völlig transparente Filme ohne Schleier oder Trübung und sehr hoher Härte, gemessen in Pendelsekunden von ca. 160 s.

### 3) Prüfung als Klarlack in Kombination mit verschiedenen hydrophoben Polyisocyanatvernetzern

Die Polyurethanlösung 1) wurde in den angegebenen Mengen mit dem jeweiligen Vernetzer vermischt, bei 2000 U/min für 2 Minuten homogenisiert und dann durch Zugabe von destilliertem Wasser auf eine Auslaufzeit im DIN 4 Becher von 25 Sekunden eingestellt.

| (Mengen in g) | **3a)** | **3b)** |
|---|---|---|
| **Polyurethanlösung 1)** | 72,2 | 72,2 |
| **Vernetzer III)** | 32,1 | |
| **Vernetzer IV)** | | 28,9 |
| NCO // OH Verhieltnis | 1,5 | 1,5 |
| Pendelsekunden nach 1 Tag RT Trocknung | 42 s | 48 s |
| Pendelsekunden nach 30' 60°C und 4h RT Trocknung | 110 s | 42 s |
| Pendelsekunden nach 30' 60°C und 1 Tag RT Trocknung | 136 s | 82 s |
| Filmtransparenz | klar | klar |
| Optischer Eindruck der Klarlacke - Fülle | exzellent | exzellent |
| Optischer Eindruck der Klarlacke - Verlauf | sehr gut | sehr gut |
| Optischer Eindruck der Klarlacke - Oberflächenstörungen | keine | keine |

Obwohl es sich um extrem einfache Klarlackrezepturen handelt, ohne jedes Additiv und ohne zusätzliche organische Lösemittel, erhielt man Beschichtungen mit exzellenten filmoptischen Eigenschaften, insbesondere bezüglich Fülle, Verlauf und Oberflächendefekten.

Die Einarbeitung der Härter war problemlos, man erhielt völlig transparente Filme ohne Schleier oder Trübung und guten Härtewerten. Besonders bemerkenswert war die sehr gut Verträglichkeit mit dem Vernetzer III), einem höherviskosen HDI-Trimerisat, dessen Verwendung in Kombination mit üblichen wässrigen Dispersionen in aller Regel zu mehr oder weniger starke getrübten Filmen mit unzureichenden Glanzwerten führt. Auch das in diesem Härter enthaltene Butylacetat zeigt keinen negativen Einfluss. Bei Verwendung von handelsüblichen Dispersionen in Kombination mit Butylacetat enthaltenden Vernetzern zeigt sich sehr häufig eine verdickende Wirkung die bis zur Gelteilchenbildung gehen kann. Deshalb können solche Vernetzer, die sehr häufig in lösemittelhaltigen 2 K PUR Systemen eingesetzt werden, in wässrigen 2 K PUR Systemen bisher nur in Ausnahmefällen, und dann in der Regel nur in Kombination mit anderen Vernetzern eingesetzt werden.

### 4) Prüfung als pigmentierter Decklack in Kombination mit einem hydrophilen Vernetzer:

| (Mengen in g) | 4a | 4b | 4c | 4d |
|---|---|---|---|---|
| **Polyurethanlösung 7)** | 66,3 | | | |
| **Polyurethanlösung 4)** | | 80,7 | | |
| **Polyurethanlösung 9)** | | | 82,8 | |
| **Polyurethanlösung 19)** | | | | 80,7 |
| Surfinol BC 104 (50%ig), (Benetzungshilfsmittel; Air 2,2 Products) | | 2,3 | 2,3 | 2,3 |
| Borchigel PW25 (25%ig), (Verdicker; Borchers GmbH) | 0,3 | 0,3 | 0,3 | 0,3 |
| Baysilone 3468 (10%ig in Methoxypropylacetat), (Borchers GmbH) | 1,8 | 2 | 2 | 2 |
| Titandioxid Tronox RK-B-4 (Kerr-McGee Pigments) | 43,4 | 46,9 | 47,6 | 46,9 |
| Borchigen SN 95 (Dispergieradditiv; Borchers GmbH) | 5,2 | 5,6 | 5,7 | 5,6 |
| *45 Min Mischen in einem Scandex Dispergierer* | | | | |
| Zugabe **Vernetzer II (100%ig)** | 34,6 | 34,6 | 34,6 | 34,6 |
| verdünnt mit Butoxyl(3-methoxy-Butanolacetat) | 8,7 | 8,7 | 8,7 | 8,7 |
| *2 Minuten 2000 U*/*min im Ultraturrax gemischt* | | | | |
| Zugabe destilliertes Wasser für Auslaufzeit von 24 s im DIN 4 Becher n. DIN 53211 | 55 | 49 | 45 | 55 |
| pH-Wert | 7 | 7 | 6,9 | 7 |
| Festkörper Decklack spritzfertig | 52% | 51% | 52% | 50% |
| Pendelhärte (s) n. DIN 53157 nach 1 d RT Trocknung | 42 s | 71 s | 66 s | 52 s |
| Pendelhärte (s) nach 2d RT Trocknung | 82 s | 100 s | 116 s | 88 s |
| Pendelhärte (s) nach 3d RT Trocknung | 95 s | 121 s | 118 s | 93 s |
| Endhärte (s) nach Trocknung 30 min 60°C + 7 Tage RT | 111 s | 141 s | 156 s | 139 s |
| Elastizität (Erichsentiefung in mm) n. DIN 53157 | 10 mm | 10 mm | 9 mm | 9 mm |
| 5 Min Chemikalientest nach 7 Tagen Trocknung bei Raumtemperatur( Superbenzin/ Methoxypropyl-acetat/ Xylol/ Ethanol) * | 1/0/0/1 | 1/0/0/3 | 1/0/1/2 | 1/1/0/2 |
| Wasserfestigkeit nach 30 Min 60°C und 7 Tagen Trocknung bei Raumtemperatur ** | 1 | 2 | 2 | 2 |
| Glanz (20° Winkel n. Gardner) nach Raumtemperaturtrocknung | 79 | 86 | 83 | 73 |
| Glanz (20° Winkel) nach 30 min 60°C Trocknung | 79 | 82 | 81 | 73 |
| Optischer Eindruck der Klarlacke - Fülle der | exzellent | exzellent | exzellent | sehr gut |
| Optischer Eindruck der Klarlacke - Oberflächenstörungen | keine | keine | keine | keine |

| | | | | |
|---|---|---|---|---|
| * Chemikalienfestigkeit Beurteilung von 0 bis 5; 0 = bester Wert; 5 = schlechtester Wert 0 = ohne Befund/ 1 = leichtes, reversibles Erweichen / 2 = reversibles Erweichen/ 3 = reversible Trübung 4 = angelöst / 5 = abgelöst | | | | |

Pigmentierte Decklacke auf Basis der erfindungsgemäßen wässrigen Polyurethanlösungen und einem hydrophilen Vernetzer führen zu Beschichtungen mit sehr guten mechanischen Eigenschaften z.B. in Härte und Elastizität, sehr guten Beständigkeitseigenschaften und insgesamt exzellenten filmoptischen Eigenschaften, insbesondere bezüglich Fülle, Filmoptik, Trübung bzw. Schleier und Oberflächenstörungen. Die Trübungswerte (Haze) liegen in der Regel bei lediglich 20%.

### 5) Prüfung als pigmentierter Decklack in Kombination mit einem hydrophoben, höherviskosen Vernetzer:

| (Mengen in g) | 5a | 5b | 5c | 5d | 5e |
|---|---|---|---|---|---|
| **Polyurethanlösung 7)** | 66,3 | | | | |
| **Polyurethanlösung 4)** | | 80,7 | | | |
| **Polyurethanlösung 9)** | | | 82,8 | | |
| **Polyurethanlösung 5)** | | | | 82,8 | |
| **Polyurethanlösung 19)** | | | | | 80,7 |
| Surfinol BC 104 ( Lff 50%ig), (Benetzung hilfsmittel; Air Products) | 2,2 | 2,3 | 2,3 | 2,2 | 2,3 |
| Borchigel PW25 ( Lff 25%ig), (Verdicker; Bochers GmbH) | 0,3 | 0,3 | 0,3 | 0,3 | 0,3 |
| Baysilone 3468 (10%ig) | 1,7 | 1,8 | 1,8 | 1,8 | 1,8 |
| Titandioxid Tronox RK-B-4 (Kerr-McGee Pi ments) | 40 | 43,5 | 44,2 | 44,2 | 43,5 |
| Borchigen SN 95 (Dispergieradditiv; Borche GmbH) | 4,8 | 5,2 | 5,3 | 5,3 | 5,2 |
| *45 Min Mischen in einem Scandex Dispergierer* | | | | | |
| Zugabe **Vernetzer VI (100%ig)** | 28,9 | 28,9 | 28,9 | 28,9 | 28,9 |
| verdünnt mit Butoxyl (3-Methoxy-butanol- acetat) | 7,2 | 7,2 | 7,2 | 7,2 | 7,2 |
| *2 Minuten 2000 U*/*min mischen mit Ultraturrax* | | | | | |
| Zugabe destilliertes Wasser für Auslaufzeit im DIN 4 Becher von 24 sec | 46 | 40 | 41 | 36 | 44 |
| pH-Wert | 7 | 7 | 7 | 6,7 | 7 |
| Festkörper Decklack spritzfertig | 53% | 53% | 53% | 53% | 52% |
| Auslaufzeit DIN 4 0h | 24 s | 24 s | 24 s | 24 s | 24 s |
| 1h | 25 s | 22 s | 25 s | 60 s | 25 s |
| 2h | 26 s | 22 s | 25 s | >60 s | 31 s |
| Pendelsekunden nach 1d RT Trocknung | 18 s | 62 s | 88 s | 56 s | 62 s |
| Pendelsekunden nach 2d RT Trocknung | 125 s | 102 s | 171 s | 104 s | 95 s |
| Pendelsekunden nach 3d RT Trocknung | 132 s | 98 s | 160 s | 99 s | 85 s |
| Pendelsekunden nach 7d RT Trocknung | 155 s | 116 s | 171 s | 114 s | 109 s |
| Endhärte in Pendelsekunden nach Trocknung 30 min 60°C und 7 Tage RT | 150s | 168 s | 191 s | 159 s | 172 s |
| 5 Min Chemikalientest nach 30 Min 60°C +7 Tage Trocknung bei Raumtemperatur (Super-benzin/ Methoxy-propylacetat/ Xy- lol/Ethanol) * | 1/0/0/1 | 0/0/0/2 | 0/1/0/2 | 1/0/0/3 | 0/0/0/2 |
| Wasserfestigkeit nach 30 Min 60°C und 7 Tagen Trocknung bei Raumtemperatur ** | 1 | 1 | 1 | 1 | 1 |
| Glanz (20° Winkel) nach Raumtemperaturtrocknung | 81 | 76 | 86 | 84 | 86 |
| Glanz (20° Winkel) nach 30 min 60°C Trocknung | 81 | 81 | 86 | 88 | 83 |
| Optischer Eindruck der Klarlacke - Fülle | exzellent | exzellent | exzellent | exzellent | exzellent |
| Optischer Eindruck der Klarlacke - Oberflächenstörungen | keine | keine | keine | keine | keine |

| | | | | | |
|---|---|---|---|---|---|
| * Chemikalienfestigkeit Beurteilung von 0 bis 5; 0 = bester Wert; 5 = schlechtester Wert ** Wasserfestigkeit Beurteilung von 0 bis 5; 0 = bester Wert; 5 = schlechtester Wert 0= ohne Befund/ 1 = leichtes, reversibles Erweichen / 2= reversibles Erweichen/ 3= reversible Trübung/ 4 = angelöst/ 5 = abgelöst | | | | | |

Die Prüfung der erfindungsgemäßen wässrigen Polyurethanlösungen in Kombination mit einem hydrophoben, höherviskosen Vernetzer VI) führt zu ausgezeichneten Ergebnissen bezüglich Filmhärte, Beständigkeitseigenschaften und insbesondere in den filmoptischen Eigenschaften wie z.B. Fülle und Glanz. Die fehlende hydrophile Modifizierung der Vernetzer wirkt sich positive auf die Beständigkeitseigenschaften aus.

Mit einem hydrophoben Vernetzer Glanzwerte (20° Winkel) von deutlich über 80 % zu erhalten, war mit Dispersionen nach dem Stand der Technik nicht möglich, insbesondere dann nicht, wenn nur geringe Mengen organischer Lösemittel eingesetzt werden und keine speziellen bzw. aufwendigen Mischtechniken eingesetzt werden. In der Regel werden bei ausschließlicher Verwendung von hydrophoben Vernetzern nur mehr oder weniger trübe Beschichtungen bzw. Lacke erhalten, die den technischen Ansprüchen nicht genügen.

### 6) Prüfung als Klarlack unter Einbrennbedingungen in Kombination mit einem hydrophoben Vernetzer

Die wässrigen Polyurethanlösungen 18), 20) und 22) werden mit dem hydrophoben Härter IV (90%-ig in Methoxypropylacetat) gemischt, wobei 10% Überschuss an Isocyanatgruppen eingesetzt werden. Nach Verdünnen mit destilliertem Wasser werden Filme auf Glasplatten aufgezogen und nach 10 Minuten Ablüften bei Raumtemperatur für 30 min bei 140°C gehärtet. Nach dem Abkühlen der Filme wurde durch einen Wischtest mit MIBK (Methylisobutylketon) die Vernetzung geprüft.

Beurteilt wurde das Aussehen/ die Beschädigung der Filme nach 100 Doppelhüben mit einem mit MIBK getränkten Wattebausch.

| | **MIBK- Wischtest Befund** |
|---|---|
| **Polyurethanlösung 18)** | Ohne Befund |
| **Polyurethanlösung 20)** | Ohne Befund |
| **Polyurethanlösung 22)** | Ohne Befund |

### 7) Prüfung bei erhöhter Aushärtetemperatur als Klarlack mit einer Mischung aus einem hydrophilen Vernetzer und einem hydrophoben Vernetzer

Die wässrigen Polyurethanlösungen 10), 11), 16) und 17) werden mit einer 1:1 Mischung aus dem hydrophoben Vernetzer VI) und dem hydrophilen Vernetzer V) gemischt, wobei 10% Überschuss an Isocyanatgruppen eingesetzt werden. Nach Verdünnen mit destilliertem Wasser werden Filme auf Glasplatten aufgezogen und nach 10 Minuten Ablüften bei Raumtemperatur für 30 min bei 110°C gehärtet. Nach dem Abkühlen der Filme wurde durch einen Wischtest mit MIBK (Methylisobutylketon) die Vernetzung geprüft.

Beurteilt wurde das Aussehen/ die Beschädigung der Filme nach 100 Doppelhüben mit einem mit MIBK getränkten Wattebausch.

| | **MIBK- Wischtest Befund** |
|---|---|
| **Polyurethanlösung 10)** | Ohne Befund |
| **Polyurethanlösung 11)** | Reversible Erweichung |
| **Polyurethanlösung 16)** | Ohne Befund |
| **Polyurethanlösung 17)** | Ohne Befund |

Eine Vernetzung der erfindungsgemäßen wässrigen Polyurethanlösungen unter Einbrennbedingungen war ebenfalls möglich, man erhielt auch auf diesem Weg sehr gut vernetzte Lacke mit sehr guten filmoptischen Eigenschaften.

## Patentansprüche

1. Verfahren zur Herstellung von wässrigen Lösungen von harnstoffguppenhaltigen, hydroxyfunktionellen Polyurethanen mit Hydroxylgruppengehalten von 2 bis 10 Gew. -% und Gehalten an Harnstoffgruppen (berechnet als NH-CO-NH-), die von Aminoalkoholen mit einer primären oder sekundären Aminogruppe und mindestens einer Hydroxylgruppe abgeleitet sind, von 3 bis 20 Gew. -%, jeweils bezogen auf das harnstoffguppenhaltige, hydroxyfunktionelle Polyurethan, bei dem zunächst NCO-funktionelle Prepolymere durch ein- oder mehrstufige Umsetzung von
a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,
b) mindestens einem Polyol
c) mindestens einem Polyisocyanat
d) ggf. sonstigen von den Verbindungen der Komponenten a), b) und e) verschiedenen hydroxy- und/oder aminofunktionellen Verbindungen hergestellt werden und diese dann
e) mit einer Aminoalkohol-Komponente, aus Aminoalkoholen mit einer primären oder sekundären Aminogruppe und mindestens einer Hydroxylgruppe umgesetzt werden, wobei der Anteil an Aminoalkoholen mit einer sekundären Aminogruppe bezogen auf die Gesamtmenge der Komponente e) mindestens 60 Gew.-% beträgt und die so erhaltenen harnstoffguppenhaltigen, hydroxyfunktionellen Polyurethane
f) in Wasser gelöst werden, wobei vor oder während des Lösungsvorgangs in Wasser die Säure- oder tertiären Aminogruppen der Hydrophilierungsmittel a) mit einem Neutralisationsmittel umgesetzt werden.

2. Verfahren gemäß Anspruch 1, **dadurch gekennzeichnet, dass** die c) eingesetzte Polyisocyanatkomponente aus c1) 27 bis 73 Gew. -% mindestens eines difunktionellen Isocyanates ausgewählt aus der Gruppe Hexamethylendiisocyanat, Isophorondiisocyanat, 2,4-Diisocyanatotoluol und/oder 2,6-Diisocyanatotoluol und 4,4'Diisocyanatodicyclohexylmethan und c2) 73 bis 27 Gew. -% mindestens eines Polyisocyanates mit durchschnittlich mehr als 2 Isocyanatgruppen mit Uretdion-, Biuret-, Isocyanurat- , Allophanat-, Carbodiimid-, Iminooxadiazindion-, Oxadiazintrion-, Urethan- und/oder Harnstoffstruktureinheiten auf Basis von Hexamethylendiisocyanat besteht.

3. Verfahren gemäß Anspruch 1 oder 2, **dadurch gekennzeichnet, dass** in Komponente e) ausschließlich Aminoalkohole mit ausschließlich einer sekundären Aminogruppe und 1 oder 2 Hydroxylgruppen eingesetzt werden.

4. Verfahren gemäß einem der Ansprüche 1 bis 3, **dadurch gekennzeichnet, dass** die harnstoffguppenhaltigen, hydroxyfunktionellen Polyurethane vor der Dispergierung in Wasser als nichtwässrige Dispersion in einem organischen Lösemittel vorliegen.

5. Wässrige Lösungen von harnstoffguppenhaltigen, hydroxyfunktionellen Polyurethanen erhältlich nach einem Verfahren gemäß einem der Ansprüche 1 bis 4.

6. Wässrige Lösungen gemäß Anspruch 5, **dadurch gekennzeichnet, dass** sie gefrierstabil sind.

7. Wasserlösliche harnstoffguppenhaltige, hydroxyfunktionelle Polyurethane mit Hydroxylgruppengehalten von 2 bis 10 Gew. -% und Gehalten an Harnstoffgruppen (berechnet als -NH-CO-NH-), die von Aminoalkoholen mit einer primären oder sekundären Aminogruppe und mindestens einer Hydroxylgruppe abgeleitet sind, von 3 bis 20 Gew. -%, jeweils bezogen auf das harnstoffguppenhaltige, hydroxyfunktionelle Polyurethan erhältlich durch Herstellung NCO-funktioneller Prepolymere durch Umsetzung von
a) mindestens einem hydroxy- und /oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe,
b) mindestens einem Polyol
c) mindestens einem Polyisocyanat
d) ggf. sonstigen von den Verbindungen der Komponenten a), b) und e) verschiedenen hydroxy- und/oder aminofunktionellen Verbindungen und Umsetzung dieser
e) mit einer Aminoalkohol-Komponente, aus Aminoalkoholen mit einer primären oder sekundären Aminogruppe und mindestens einer Hydroxylgruppe umgesetzt werden, wobei der Anteil an Aminoalkoholen mit einer sekundären Aminogruppe bezogen auf die Gesamtmenge der Komponente e) mindestens 60 Gew.-% beträgt,
wobei die aus den Verbindungen der Komponente a) herrührenden Säuregruppen oder tertiäre Aminogruppen im harnstoffguppenhaltigen, hydroxyfunktionellen Polyurethan durch ganz oder teilweise Neutralisation in ihrer Salzform vorliegen können.

8. Polyurethansysteme enthaltend als Komponente A) harnstoffguppenhaltige, hydroxyfunktionelle Polyurethane gemäß Anspruch 7 oder deren wässrige Lösungen gemäß Anspruch 5 oder 6.

9. Polyurethansysteme gemäß Anspruch 8, **dadurch gekennzeichnet, dass** sie zusätzlich Polyisocyanate B) enthalten, die ggf. hydrophil modifiziert sind.

10. Polyurethansysteme gemäß Anspruch 8 oder 9, **dadurch gekennzeichnet, dass** in B) ausschließlich hydrophobe Polyisocyanatvernetzer auf Hexamethylendiisocyanatbasis eingesetzt werden.

11. Polyurethane erhältlich unter Verwendung von Polyurethansystemen gemäß einem der Ansprüche 8 bis 10.

12. Polyurethane gemäß Anspruch 11, **dadurch gekennzeichnet, dass** es sich um ein oder mehrlagig aufgebrachte Lacke, Beschichtungsmittel, Dichtstoffe, Tinten, Druckfarben, Schlichten, Haftvermittler, Reaktivverdünner handelt.

13. Substrate beschichtet mit Polyurethanen gemäß Anspruch 11 oder 12.
